# EUROPEAN PATENT SPECIFICATION

(11) **EP 3 789 872 B1**
(45) Date of publication and mention of the grant of the patent: **07.05.2025**
(21) Application number: 20163322.9
(22) Date of filing: 16.03.2020
(51) Int. Cl.: G06F 11/07, G06F 11/30, G06F 8/35, G06F 8/20, G06N 20/00, G06F 9/451, G06F 11/36, G06F 11/34

(54) **MODEL IMPROVEMENT SUPPORT SYSTEM**
UNTERSTÜTZUNGSSYSTEM FÜR MODELLVERBESSERUNG
SYSTÈME DE SUPPORT D'AMÉLIORATION DE MODÈLE

(30) Priority: 06.09.2019 JP 2019163454
(43) Date of publication of application: 10.03.2021
(73) Proprietor: Hitachi, Ltd., Tokyo 100-8280 (JP)
(72) Inventor: Moriya, Satoru, Tokyo, 100-8280 (JP); Hatasaki, Keisuke, Tokyo, 100-8280 (JP); Tezuka, Shin, Tokyo, 100-8280 (JP); Yasuda, Yoshiko, Tokyo, 100-8280 (JP)
(74) Representative: Manitz Finsterwald Patent- und Rechtsanwaltspartnerschaft mbB

(56) References cited:
- US-A1- 2012 101 800
- US-A1- 2012 191 631
- US-A1- 2016 371 601

## Description

### TECHNICAL FIELD

The present invention relates to the improvement of a model developed by techniques of machine learning.

### BACKGROUND

Application software (application programs or apps) has been emerging which uses a model developed through machine learning. As different skill sets are required in such application programs, in typical cases a model developer who develops a model is not an application developer, who develops an application program using the model developed by the model developer.

A model developer develops a model using a learning dataset and an evaluation dataset. However, it is difficult to develop a complete model free from the possibility of occurrence of erroneous determination or the like. As a result, a model developer changes the learning dataset, adjusts learning parameters, and thereby realizes model improvement. During implementation of such model improvement, a model developer usually determines an indicator or indicators which he/she focuses on and attempts to improve the indicator(s).

Meanwhile, an application developer selects and uses a model or models suited for the application software to be developed. At this point, in some cases, with regard to the selected model, the indicator which the model developer who developed the model focuses on may be different than the indicator which the application developer focuses on. In addition, the data which the model developer uses in the creation and evaluation of the model may be different than the data which the application developer uses in the model evaluation and utilization. In such a case, a result expected by the application developer can be obtained on a model of a certain version but may not be obtained on a new model whose indicator focused on by the model developer has been improved.

A possible approach to avoiding such a situation would be feedback of an application developer's request or the like for the model developer from the application developer to the model developer so that the application developer's request or the like can be utilized in improvement of the model. In the feedback, it is desirable that not only the indicator the application developer focuses on and a result of evaluation of the model in the application software but also a learning and evaluation dataset which is indispensable in the model improvement should be provided by the application developer to the model developer.

However, it may not be possible to share all of the various datasets held by the application developer with the model developer due to various reasons such as the significance and confidentiality of the data as such, regional restrictions, company security policy, and the like. In this case, it is difficult for the model developer to promote model improvement utilizing feedback from the application developer.

As such, there is a need for a scheme that enables development and evaluation of a model while restricting the scope of the dataset provided by the application developer where the data processing by the model developer is permitted in relation to the model developer.

Reference 1 discloses an approach for performing processing while maintaining confidentiality of data through carrying out concealment processing according to the attributes of data.

Reference 1: Japanese Patent Laid-Open No. 2014-211607

US 2012/191631 A1 discloses a dynamic predictive modeling platform and the training of a model.

### SUMMARY

The scheme disclosed by Reference 1 will make it possible to selectively conceal the section or portion that the application developer does not want to share with the model developer out of the dataset provided by the application developer to the model developer.

However, it will be difficult for a model developer to improve a model if a feature quantity useful in the model improvement is included in the confidential section.

It is the object of the present invention to provide a model improvement support system and method that make it possible for the model developer to achieve model improvement using the dataset while restricting the access by the model developer to the dataset provided by the application developer.

This object is accomplished by the features of the independent claims.

A model improvement support system has the features of claim 1. It makes a determination, for each of one or more datasets selected by a model developer from among one or more datasets provided from an application developer and input to the model in utilization of the model, of whether or not an execution condition of a learning/evaluation program for performing learning/evaluation on the model, which is at least either of learning and evaluation of the model, satisfies an execution condition associated with the dataset, and executes the learning/evaluation program with this dataset used as an input to the model if the result of the determination is affirmative. Claim 1 recites further features.

A model improvement support method has the features of claim 8.

According to the present , it is made possible for the model developer to achieve model improvement using the dataset while restricting the access by the model developer to the dataset provided by the application developer.

### BRIEF DESCRIPTION OF THE DRAWINGS

FIG. 1 is a diagram illustrating an example of configuration of an entire system in accordance with a first feature combination;
FIG. 2 is a diagram illustrating an example of format of a computer;
FIG. 3 is a diagram illustrating an example of format of a model management table;
FIG. 4 is a diagram illustrating an example of format of a learning/evaluation program management table;
FIG. 5 is a diagram illustrating an example of format of a learning/evaluation setting table;
FIG. 6 is a diagram illustrating an example of format of a learning/evaluation job table;
FIG. 7 is a diagram illustrating an example of format of an evaluation result table;
FIG. 8 is a diagram illustrating an example of format of a user management table;
FIG. 9 is a diagram illustrating an example of format of a tenant management table;
FIG. 10 is a diagram illustrating an example of format of a dataset management table;
FIG. 11 is a diagram illustrating an example of format of a computer management table;
FIG. 12 is a flowchart of an IF program;
FIG. 13 is a flowchart of a model management program;
FIG. 14 is a flowchart of a data management program;
FIG. 15 is a flowchart of a learning/evaluation control program;
FIG. 16 is a flowchart of a learning/evaluation execution program;
FIG. 17 is a diagram illustrating an example of a model list screen;
FIG. 18 is an example of a model details screen;
FIG. 19A is a diagram illustrating an example of a model generation/evaluation registration screen as a whole;
FIG. 19B is a diagram illustrating an example of part of the model generation/evaluation registration screen;
FIG. 19C is a diagram illustrating an example of part of the model generation/evaluation registration screen;
FIG. 20 is a diagram illustrating an example of a program registration screen;
FIG. 21 is a diagram illustrating an example of a dataset registration screen;
FIG. 22A is a diagram illustrating an example of the concept of processing according to a second feature combination in a case where no collision occurs between execution conditions;
FIG. 22B is a diagram illustrating an example of the concept of processing according to the second feature combination in a case where collision has occurred between execution conditions; and
FIG. 23 is a flowchart illustrating details of the step S4020 according to the second feature combination.

### DETAILED DESCRIPTION OF FEATURE COMBINATIONS

In the following description, the term "interface apparatus" as used herein may refer to one or more interface devices. And the term "one or more interface devices" may envisage at least any one of the devices shown below:
- One or more input/output (I/O) interface devices: The I/O (Input/Output) interface device is an interface device for at least either or both of an I/O device and a remote display computer. The I/O interface device for the display computer may be a communication interface device. The at least one I/O device may be any user interface device such as an input device such as a keyboard and a pointing device and an output device such as a display device.
- One or more communication interface devices: The one or more communication interface devices may be, and is not limited to, one or more communication interface devices of the same or similar types (for example, one or more NICs (network interface cards)) and may be two or more communication interface devices of different types (for example, an NIC plus a host bus adapter (HBA)).

Also, the term "memory" as used herein refers to one or more memory devices, which may typically be a main storage device. At least one memory device in the memory may be a volatile storage device or a non-volatile storage device.

Also, in the following description, the term "persistent storage apparatus" as used herein refers to one or more persistent storage devices. The persistent storage device is typically a non-volatile storage device (for example, an auxiliary storage device) and, specifically, and is not limited to, a hard disk drive (HDD) or a solid state drive (SSD).

Also, the term "storage apparatus" as used herein may refer to at least a memory of the memory and the persistent storage apparatus.

Also, the term "processor" as used herein refers to one or more processor devices. The at least one processor device is typically a microprocessor device such as a central processing unit (CPU) but may also be any other processor device such as a graphics processing unit (GPU). The at least one processor device may have a single-core or multiple-core configuration. The at least one processor device may be a processor core. The at least one processor device may be a processor device in a broad sense such as a hardware circuit that performs all or part of the processing (for example, a field-programmable gate array (FPGA) or an application specific integrated circuit (ASIC)).

Also, in the following description, information that enables an output to be obtained in response to an input may be described using indications such as "xxx table." This information may be any piece or pieces of data having any appropriate structure. Accordingly, the "xxx table" may also be understood as and indicated as "xxx information." Also, in the following description, the formats of the tables are merely examples and one table may be split into two or more tables, and all or part of two or more tables may constitute one single table.

Also, in the following description, functions may be described using the indication of "yyy unit." The functions may be implemented by one or more computer programs being run by a processor, and may also be implemented by one or more hardware circuits (for example, FPGA or ASIC). In the case where a function is implemented by a program being run by a processor, predetermined processing will be performed as appropriate using a storage apparatus and/or an interface apparatus and the like, so that the function may be defined as at least part of the processor. A process described with a function used as a nominative (or subject) may be provided as a process performed by a processor or an apparatus that includes the processor. A program may be installed from a program source. The program source may be, and is not limited to, a program distribution computer or a computer-readable storage medium (for example, a non-transitory storage medium). The descriptions of the functions are merely of exemplary nature and multiple functions may be integrated into one single function or one function may be subdivided into multiple functions.

Also, in the following description, description of a process may be given with the term "program" used as a nominative (or subject). A program, when being run by a processor, performs a predetermined process as appropriate using a storage apparatus and/or an interface apparatus or the like, so that the nominative of the process at issue may be understood as a processor (alternatively, a device such as a controller including the processor). A program may be installed from a program source onto an apparatus such as a computer. The program source may be, and is not limited to, a program distribution server or a computer-readable (for example, non-transitory) storage device. Also, in the following description, two or more programs may be implemented as one single program and one single program may be implemented as two or more programs.

Also, in the following description, the "model improvement support system" may be configured as one or more computers and may also be implemented on a resource pool including multiple computation resources (for example, cloud infrastructure). For example, in a case where a computer has a display device and the computer displays information on its own display device, this computer may be the model improvement support system. The act of "displaying information" may be the act of displaying the information on a display device of the model improvement support system as such or may also be the act of the model improvement support system transmitting the information to a remote display computer (in the latter case, the information will be displayed by the display computer).

Also, the term "learning/evaluation" as used herein refers to at least either or both of learning and evaluation.

Also, in the following description, "development" of model refers to both of creation of a model without any feedback regarding an existing model (development from scratch) and "improvement" of a model. And "improvement" of a model refers to both of "modification" of the model based on feedback regarding an existing model or models and creation of a new model based on the feedback.

Also, the term "generation/evaluation" as used herein refers to at least either or both of generation and evaluation.

Feature combinations will be described hereinbelow with reference to the drawings and these feature combinations will be summarized at the end of the specification.

### (First Feature combination)

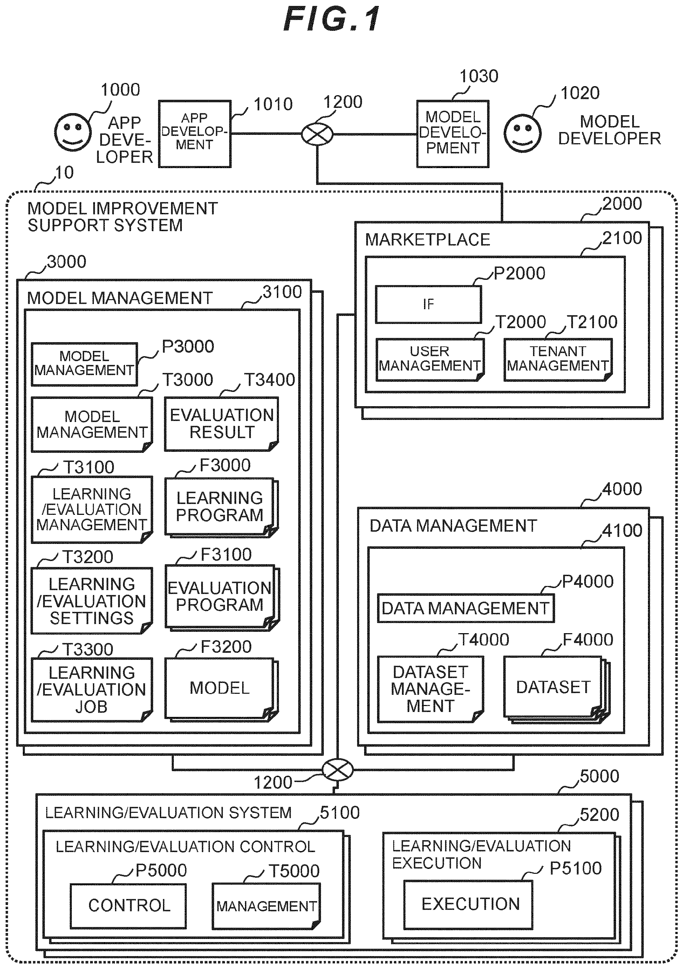

FIG. 1 is a diagram illustrating an example of configuration of the entire system in accordance with a first feature combination.

In the context of the first feature combination, description will be given based on an example where, in a case where an application developer 1000 develops application software that performs failure sign diagnosis on damage to a bearing of a motor, data associated with use of a model obtained during operation of the application software is fed back to a model developer 1020, and the model developer 1020 carries out improvement of the model.

The application software calls the model developed by the model developer 1020 using an application programming interface(API) or the like and conducts the diagnosis. In the meantime, let us consider here a case in which there is no model that can perform sign diagnosis with high accuracy on the bearing damage only and there only exists a model having lower accuracy but capable of also performing diagnosis on failures other than bearing damage such as coil damage and the like. On the other hand, the model developer who has developed the model determines that maximization of the average value of the prediction accuracies of failure sign diagnosis of multiple types is an important indicator and improves the model accordingly.

In such a case, results expected by the application developer 1000 can be obtained on a model of a certain version. However, it is not necessarily possible to obtain the results expected by the application developer 1000 on a new model that has been improved in terms of the indicator which the model developer 1020 focuses upon. In order to avoid this situation, on a channel from the application developer 1000 to the model developer 1020, requests and evaluation results and the like on the side of the application developer 1000 are fed back to the model developer 1020.

In the feedback, in addition to the indicator considered to be important by the application developer 1000 and the evaluation result of the model in the app, the application developer 1000 provides, to the model developer 1020, a dataset which the application software loads into the model.

In the first feature combination, the application developer 1000 registers, in a marketplace system 2000, the indicator that the application developer 1000 focuses on in relation to the model used by the application software; the model evaluation result in the application software environment; and the dataset used by the application developer 1000. The model developer 1020 uses a learning/evaluation system 5000, makes use of the indicator, dataset, etc. registered by the application developer 1000, and performs improvement of the model. By virtue of the model improvement support system 10 of the first feature combination, it is made possible to perform improvement of the model by the model developer 1020 while the content of the dataset provided by the application developer 1000 remains in a state where it is not disclosed to the model developer 1020.

The model improvement support system 10 includes one or more marketplace systems 2000 that receive requests from the application developer 1000, the model developer 1020, or the like; one or more model management systems 3000 that manage information necessary for the model and model management; one or more data management systems 4000 that manage data necessary in model development and learning/evaluation and information necessary in the data management; and one or more learning/evaluation systems 5000 that perform learning/evaluation on the model in response to the request from the model developer 1020.

The one or more application developer 1000 performs development of the application software using one or more application development computers 1010. The application development computer 1010 performs communications via the one or more networks 1200 with one or more marketplace systems 2000. The application developer 1000 accesses the marketplace system 2000 using the application development computer 1010 to acquire a model to be used by the application software and registers the feedback to the model used by the application software.

The one or more model developers 1020 perform development of a learning program and an evaluation program using the one or more model development computers 1030. The model development computer 1030 performs communications via the one or more networks 1200 with the marketplace system 2000. The model developer 1020 accesses the one or more learning/evaluation systems 5000 via the one or more marketplace systems 2000, performs training of the model, performs evaluation of the trained model, and registers it in the marketplace system 2000. Also, the model developer 1020, by using the marketplace system 2000, acquires the feedback on the model from one or more application developers 1000 who use the model.

Note that the application developer 1000 and the model developer 1020 may be a human or a program as long as they are capable of requesting, to the marketplace system 2000, development of the model and execution of learning/evaluation or the like.

The one or more marketplace systems 2000 include one or more interface (IF) computers 2100.

The IF computer 2100 includes a model IF program P2000 that receives, via the application development computer 1010 and the model development computer 1030, requests from the application developer 1000 and the model developer 1020 so as to execute the received requests; a user management table T2000 that includes information indicative of users such as the application developer 1000 and the model developer 1020; and a tenant management table T2100 that includes information indicative of one or more tenants which are groups each including one user or multiple users.

The one or more model management systems 3000 include one or more model management computer 3100.

The model management computer 3100 includes a model management program P3000 that performs management of the model and provides an input and output interface for model related information for other computers; a model management table T3000 that includes model information; a learning/evaluation program management table T3100 that includes information indicative of the program that performs the model learning/evaluation; a learning/evaluation setting table T3200 that includes information indicative of the settings for the model learning/evaluation; a learning/evaluation job table T3300 that includes information indicative of an execution status of the model learning/evaluation process; an evaluation result table T3400 that includes information indicative of the evaluation result of the created model; a learning program file F3000 as the actual form of implementation of the learning program; an evaluation program file F3100 as the actual form of implementation of the evaluation program; and a model file F3200 as the actual form of implementation of the model.

Transmission and reception of all the data included in the model management system 3000 as well as the content of the files are performed via the model management program P3000 provided in the model management computer 3100, and, as an example, a database management system may be mentioned. Any other systems may be used as long as they are capable of managing data and files. Also, persistent storage of data and files may be realized using a database such as relational database and NoSQL, or realized by storing them in the form of a file into a file system, or any other suitable schemes may also be used.

The one or more data management systems 4000 include one or more data management computers 4100.

The data management computer 4100 includes a data management program P4000 that performs management of data and provides a data input and output interface; a dataset management table T4000 that includes information indicative of the dataset; and a dataset file F4000 as the actual form of implementation of the dataset.

Transmission and reception of all pieces of data included in the data management system 4000 as well as the content of the files take place via the data management program P4000 included in the data management computer 4100 and, as an example, a database management system may be mentioned. Any other systems may be used as long as they are capable of managing data and files. Also, persistent storage of data and files may be realized using a database such as relational database and NoSQL, or realized by storing them in the form of a file into a file system, or any other suitable schemes may also be used.

The one or more learning/evaluation systems 5000 include one or more learning/evaluation control computers 5100 and one or more learning/evaluation execution computers 5200. The learning/evaluation control computer 5100 includes a learning/evaluation control program P5000 that controls the learning/evaluation of the model; and a computer management table T5000 that includes information indicative of the computer for performing the learning/evaluation. The learning/evaluation execution computer 5200 includes a learning/evaluation execution program P5100 that executes the learning/evaluation. Note that at least either of the learning/evaluation control computer 5100 and the learning/evaluation execution computer 5200 may include the function of recording logs including information indicative of the history and the like of the individual learning process or evaluation process and the function of transmitting the logs to other computers.

The individual computers in the entire system including the model improvement support system 10 are connected via one or more networks 1200. Examples of the network 1200 may include the Internet, and the network 1200 may be a virtual private network (VPN) or any other networks.

Note that physical apparatuses, wires for interconnection of the apparatuses, etc. which do not appear in FIG. 1 may also be provided. Also, the network 1200 via which the computers within the model improvement support system 10 are interconnected and the network 1200 via which computers external to the model improvement support system 10 (for example, the application development computer 1010) are interconnected may be one and the same network or may be two distinct networks.

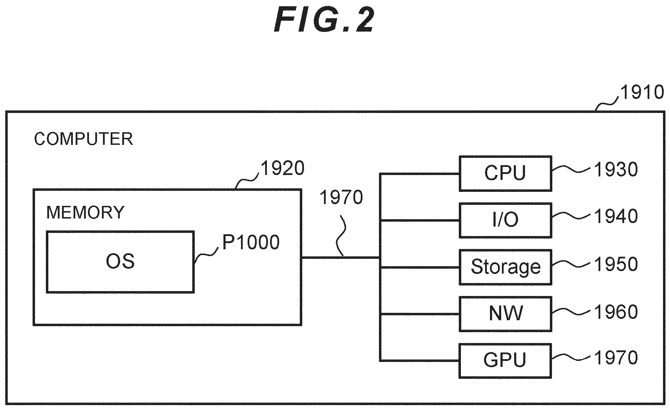

FIG. 2 is a diagram illustrating an example of configuration of a computer.

The configuration of the computer 1910 is applicable to any one of the above-described computers 2100, 3100, 4100, 5100, 5200, 1010, and 1030. The computer 1910 includes an interface apparatus, a storage apparatus, and a processor connected to them. Specifically, for example, the computer 1910 includes a memory 1920, a CPU 1930, an input/output IF 1940, a persistent storage apparatus 1950, a NW-IF 1960, and GPU 1970, where these components are interconnected by an internal bus 1980. The input/output IF 1940 and the NW-IF 1960 are examples of the interface apparatus. The memory 1920 and the persistent storage apparatus 1950 are examples of the storage apparatus. The CPU 1930 and the GPU 1970 are examples of the processor.

The program is stored in the persistent storage apparatus 1950, loaded onto the memory 1920, and executed by the CPU 1930. Note that, in this feature combination, an operating system (OS) is loaded onto the memories 1920 of all the computers 1910 and the OS is executed by the CPU 1930.

All of the computers may be a physical computer or a virtual computer operating on a physical computer. Also, the storage apparatuses of the individual computers are not essential elements and they may be replaced by an external storage apparatus or a storage service that logically provides the functionality of the storage apparatus.

Examples of the NW-IF 1960 included in the computers may include a network interface (NIC) but any other interfaces may also be used as appropriate.

Also, an output apparatus such as a display unit and an input/output IF 1940 such as a keyboard and a mouse may also be provided. In a case where the computer is remote-managed via a network by a technique such as Secure Shell (SSH), the input IF is not essential. Note that the GPU 1970 is not an essential element.

The programs and the tables included in the above-described individual computers may also be included in the persistent storage apparatus provided in the individual computers. In addition, all the programs are executed by the CPUs included in the individual computers.

Note that, in this feature combination, all of the programs may be run on different computers or may be run on one single computer. Also, all steps of any one of the programs may be performed in one single computer or the programs may be run on different computers on a per-step basis.

Also, components other than those illustrated in FIG. 2 or wires interconnecting the components may be provided as appropriate in the computer 1910.

In the following description, the individual tables will be described. Note that, in the tables, an identifier of a certain element may take any appropriate numerical form or expression as such an identifier as long as it facilitates identification of the element. For example, either of text format and Markdown format may be adopted as the form of the identifier, or any other formats may be adopted. Also, with regard to both of the disclosure condition and the execution condition which will be described later, it is possible to adopt at least either of a designation of an object that satisfies a condition and a designation of an object that does not satisfy the condition. Also, in the drawings, the identifier may be indicated as an abbreviated form "ID" and the information as abbreviated form "Info."

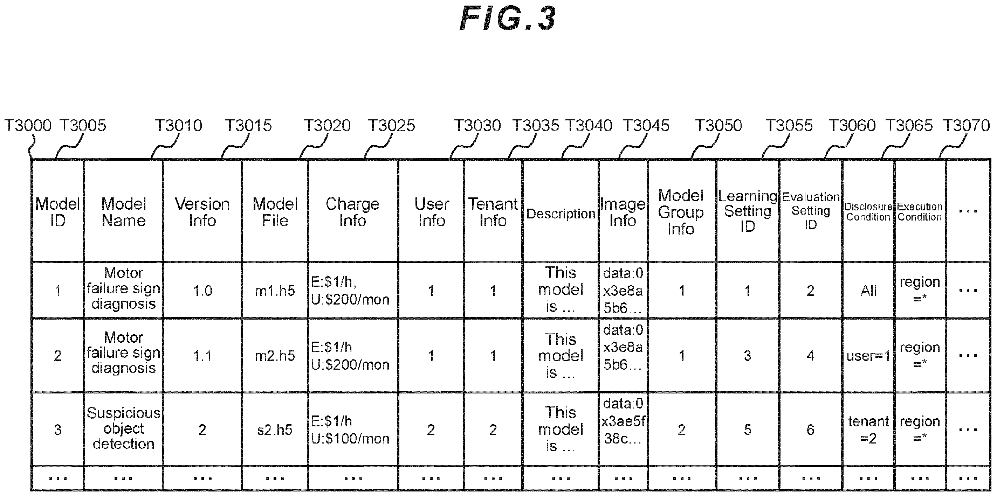

FIG. 3 is a diagram illustrating an example of format of the model management table T3000.

The model management table T3000 includes information necessary for management of the individual models registered in the model management system 3000. Each record includes model information of the versions of the model. Note that what is described in the model management table is not limited to the models of the same type having the same purpose, but, for example, in addition to the motor failure sign diagnosis, information of the models of different types such as that of suspicious object detection may also be described therein.

The model management table T3000 has a record for each model. The records each include pieces of information such as a model identifier T3005, a model name T3010, a version information T3015, a model file T3020, a charge information T3025, a user information T3030, a tenant information T3035, a description T3040, an image information T3045, a model group information T3050, a learning setting identifier T3055, an evaluation setting identifier T3060, a disclosure condition T3065, and an execution condition T3070.

The model identifier T3005 is an identifier (for example, a serial number or the like) for uniquely identifying the model within the table.

The model name T3010 is a piece of information indicative of the name of the model (for example, a character string entered by the model developer 1020 on the model generation/evaluation screen G3000). The model name may be displayed, for example, on a model list screen G1000 or a model details screen G2000.

The version information T3015 is a value used to distinguish different versions of the same model from one another. Note that being versions of the same model may be determined, for example, from the fact that the values of the model group information T3050 agree with each other.

The model file T3020 indicates the file name of the file which is an actual form of the model (for example, a file that includes information on network information and weighting for deep learning). For example, the file name is a value set by the model developer 1020 on the model generation/evaluation screen G3000.

The charge information T3025 is a value used in evaluation or utilization of a model, and includes information on an amount of payment which a user who has requested evaluation or utilization has to bear or any other relevant information. The value may be "$200/mon" or the like in the case where a user has to pay "$200" a month when he/she requests the utilization at issue. Note that, in the FIG. 3, "E" represents evaluation and "U" represents utilization.

The user information T3030 indicates the identifier of the user who has registered the versions of the model in the marketplace system 2000 via the model generation/evaluation screen G3000 or the like.

The tenant information T3035 is a piece of information indicative of an identifier of the tenant to which the user belongs who has registered the versions of the model in the marketplace system 2000 via the model generation/evaluation screen G3000 or the like.

The description T3040 is a piece of information indicative of, for example, an explanatory text of the model displayed on the model detail screen G2000 or the like. This information may be information that has been entered by the model developer 1020 on the model generation/evaluation screen G3000.

The image information T3045 is a piece of information indicative of, for example, an image to be displayed on the model list screen G1000 or the like (an image that represents the model). This information may be information designated by the model developer 1020 on the model generation/evaluation screen G3000.

The model group information T3050 is an identifier for identifying the fact that, with regard to the model information of each record, models have different versions but pertain to the same group of models and, for example, is a value of the model identifier T3005 of the record including the model information of the version registered first.

The learning setting identifier T3055 is an identifier indicative of the setting information at the time of the model generation conducted on the learning/evaluation system 5000 and, for example, may be a value of the setting identifier T3105 held by the learning/evaluation setting table T3200.

The evaluation setting identifier T3060 is an identifier indicative of the setting information at the time of the model evaluation conducted on the learning/evaluation system 5000 and, for example, may be the value of the program identifier 3105 held by the learning/evaluation program management table T3100.

The disclosure condition T3065 is a value that controls the scope of the users, tenants, and the like to which the models registered in the model management system 3000 are allowed to be disclosed. As this value, for example, "All" (to be disclosed to all users), "user = 1" (to be only disclosed to the user having the user identifier "1"), and the like may be adopted. Note that, as the value, in place of or in addition to the value designating a disclosure-eligible user, a value designating a disclosure-prohibited user (for example, "not user = 1" (the user having the user identifier "1" is excluded from the scope of disclosure)) may also be adopted. The "disclosure condition" is constituted by one or more disclosure condition elements, and the disclosure condition T3065 will take one or more values each corresponding to the one or more disclosure condition elements. The "disclosure condition" may be called "disclosure condition set" and the "disclosure condition element" may also be called a disclosure condition.

The execution condition T3070 is a value that controls the location of execution or the like of the model registered in the model management system 3000. As the value, for example, "region = 1" (the model is allowed to be executed only when the identifier of the region to which the computer executing the model belongs is "1") may be mentioned. Note that, as the value, in place of or in addition to the value indicative of the condition under which the execution is allowed, a value indicative of the condition under which the execution is prohibited (for example, "not region = 1" (this model is not to be executed on this computer when the identifier of the region to which the computer executing the model belongs is "1")) may also be adopted. The "execution condition" is constituted by one or more execution condition elements and the execution condition T3070 is one or more values each corresponding to the one or more disclosure condition elements. The "execution condition" may be called an "execution condition set" and the "execution condition element" may also be called an execution condition.

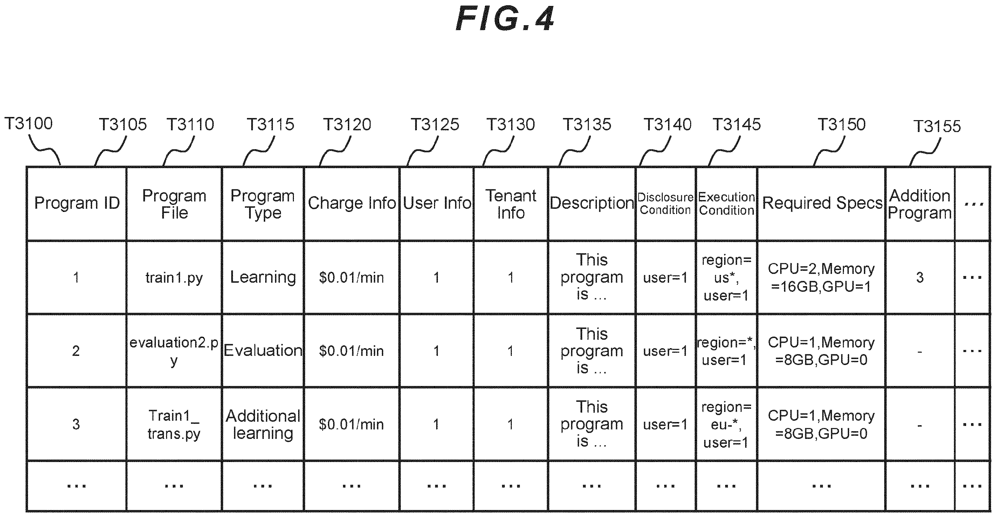

FIG. 4 is a diagram illustrating an example of format of the learning/evaluation program management table T3100.

The learning/evaluation program management table T3100 includes program information necessary for managing the learning program and the evaluation program registered in the model management system 3000.

The learning/evaluation program management table T3100 has a record for each program. The records each include pieces of information such as a program identifier T3105, a program file T3110, a program type T3115, a charge information T3120, a user information T3125, a tenant information T3130, a description T3135, a disclosure condition T3140, an execution condition T3145, a required specification T3150, and an additional program T3155.

The program identifier T3105 is an identifier for uniquely identifying the program information within the table.

The program file T3110 is the file name of the file that the user has designated on the program registration screen G4000 when registering the program via the program registration screen G4000 or the like, a value that has been automatically assigned by the model management program P3000, or any other relevant element.

The program type T3115 includes a value that represents the program type designated by the user on the registration screen when registering the program via the program registration screen G4000 or the like.

The charge information T3120 includes a value that represents the amount of payment or the like the user has to bear when performing learning/evaluation on a model using the program.

The user information T3125 is a value indicative of the identifier of the user who registered the program for the model management system 3000 via the program registration screen G4000 or the like.

The tenant information T3130 is a value indicative of the identifier of the tenant to which the user belongs who registered the program for the model management system 3000 via the program registration screen G4000 or the like.

The description T3135 is a piece of information indicative of, for example, the explanatory text of the program displayed on the model generation/evaluation screen G3000.

The disclosure condition T3140 is a value that controls the scope of the disclosure-eligible users, tenants, or the like regarding the program registered in the model management system 3000.

The execution condition T3145 is a value that controls the location of execution or the like of the program registered in the model management system 3000.

The required specification T3150 is a piece of information indicative of the specs (specifications) such as the performance of the CPU 1930 and the memory 1920 which the learning/evaluation execution computer 5200 needs to have when executing the program, in other words, information indicative of the condition of the computation resources for the execution of the program.

The additional program T3155 is an identifier of a program on which additional learning is performed in response to the program type T3155 "additional learning." Note that this is used in the second feature combination.

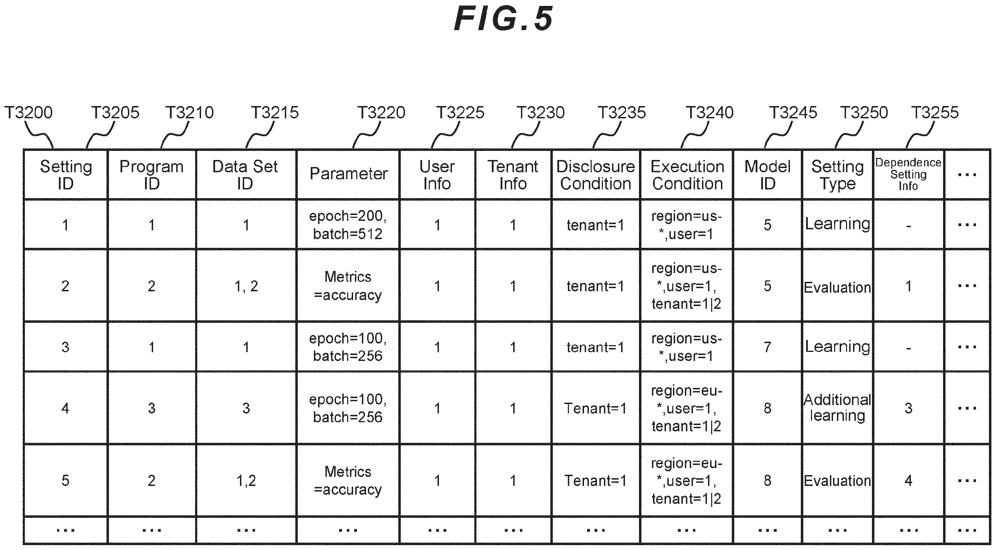

FIG. 5 is a diagram illustrating an example of format of the learning/evaluation setting table T3200.

The learning/evaluation setting table T3200 includes information indicative of which program and which dataset should be used to generate or evaluate a model when generating or evaluating the model using the learning/evaluation program registered in the model management system 3000.

The learning/evaluation setting table T3200 includes a record for each setting. The records each include pieces of information such as a setting identifier T3205, a program identifier T3210, a dataset identifier T3215, a parameter T3220, user information T3225, tenant information T3230, a disclosure condition T3235, an execution condition T3240, a model identifier T3245, a setting type T3250, and dependency setting information T3255.

The setting identifier T3205 is an identifier for uniquely identifying the learning/evaluation setting information within the table.

The program identifier T3210 is an identifier of the program used in the learning/evaluation corresponding to this setting and, for example, may be a program name entered by the user on the model generation/evaluation screen G3000 or may be the program identifier T3105 of the program held by the learning/evaluation program management table T3100.

The dataset identifier T3215 is an identifier of the dataset used in the learning/evaluation corresponding to this setting and, for example, may be a dataset name entered by the user on the model generation/evaluation screen G3000 or may be the dataset identifier T3210 of this dataset held by the dataset management table T4000.

The parameter T3220 is a piece of information indicative of the parameter used in the learning/evaluation corresponding to this setting and, for example, may be the learning setting entered by the user (at least either of the application developer 1000 and the model developer 1020) on the model generation/evaluation screen G3000 and may be an evaluation indicator.

The user information T3225 is a piece of information indicative of an identifier of the user who has registered the versions of the model in the marketplace system 2000 via the model generation/evaluation screen G3000 or the like.

The tenant information T3230 is a piece of information indicative of an identifier of the tenant to which the user belongs who has registered the versions of the model in the marketplace system 2000 via the model generation/evaluation screen G3000 or the like.

The disclosure condition T3235 is a value that controls the scope of the users, tenants, etc. to which the learning/evaluation job registered in the model management system is to be disclosed.

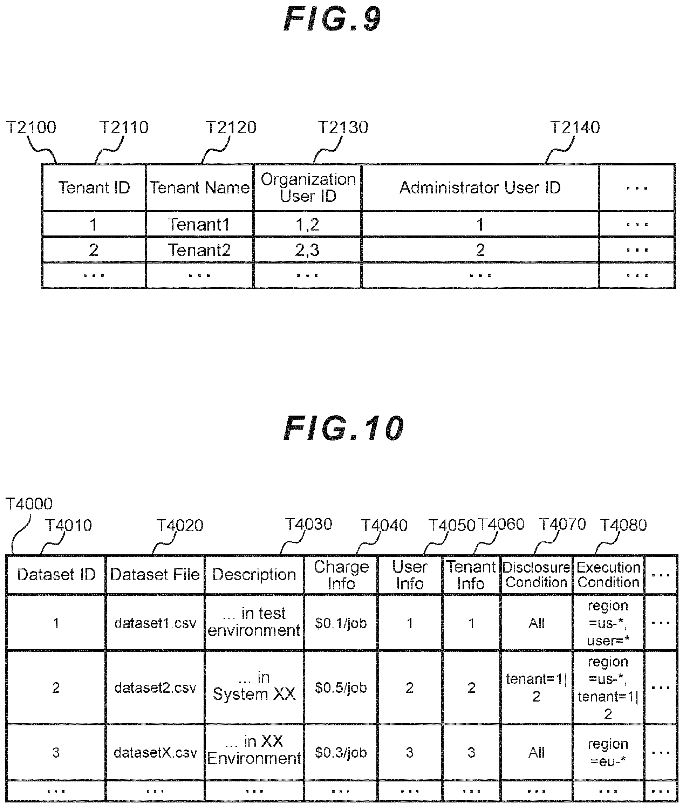

The execution condition T3240 is a value that controls the execution of the learning/evaluation job registered in the model management system. Note that the model management program P3000 may set the execution condition T3240 instead of direct entry of the execution condition T3240 by the user. Specifically, for example, with regard to one record in the learning/evaluation setting table T3200, the model management program P3000 computes the relationship (for example, a logical product) between the execution condition T3145 specified by the program identifier T3210 and the execution condition T4080 (see FIG. 10) of the dataset specified by the dataset identifier T3215, and defines the information in compliance with this relationship as the execution condition T3240 and sets the execution condition T3240 to this record.

The model identifier T3245 is a value indicative of the model that is associated with the learning or evaluation. This value is set by the model management program P3000 as appropriate upon generation of a request of model generation or evaluation on the model generation/evaluation screen G3000.

The setting type T3250 is a value indicative of the setting type (for example, "learning", "additional learning" or "evaluation").

The dependency setting information T3255 is a value (for example, a setting identifier) indicative of the learning/evaluation setting on which the corresponding learning/evaluation setting is dependent when the corresponding learning/evaluation setting is dependent on another learning/evaluation.

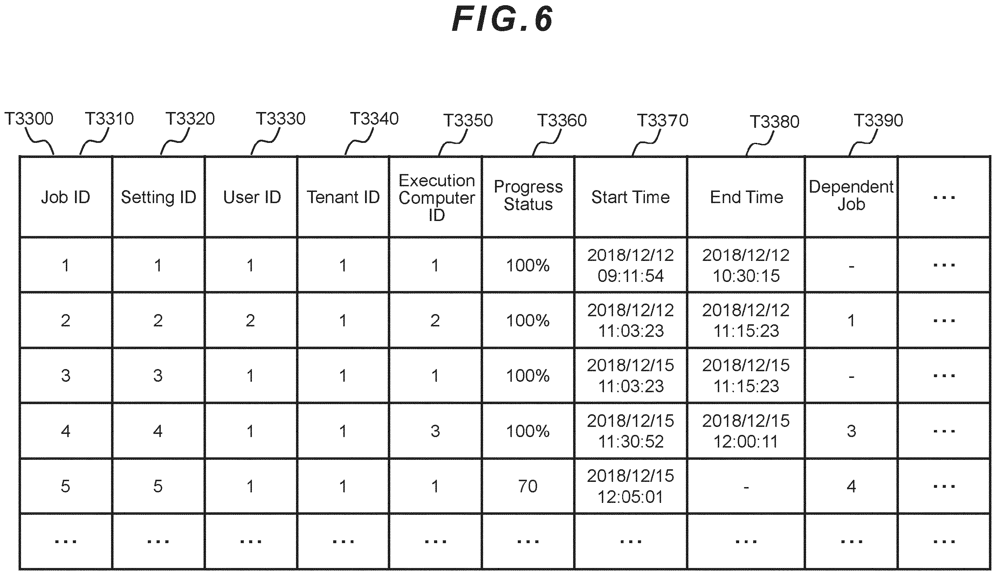

FIG. 6 is a diagram illustrating an example of format of the learning/evaluation job table T3300.

The learning/evaluation job table T3300 includes pieces of information such as a piece of information indicative of which learning/evaluation execution computer 5200 the learning (generation), evaluation, etc. of each model should be performed on, the setting information of the learning/evaluation, and information for managing the progress status or the like of the learning/evaluation.

The learning/evaluation job table T3300 includes a record for each learning/evaluation job. The records each include pieces of information such as a job identifier T3310, a setting identifier T3320, a user identifier T3330, a tenant identifier T3340, an execution computer identifier T3350, a progress status T3360, a start time T3370, an end time T3380, and a dependent job T3390.

The job identifier T3310 is an identifier for identifying the learning/evaluation job.

The setting identifier T3320 is an identifier for identifying the information on what kind of program, what kind of dataset, and what kind of parameter was used to execute the learning/evaluation job.

The user identifier T3330 is an identifier of the user who conducted the learning/evaluation of the model.

The tenant identifier T3340 is an identifier of the tenant to which the user belongs who conducted the learning/evaluation of the model.

The execution computer identifier T3350 is an identifier that identifies the learning/evaluation execution computer 5200 that executes the learning/evaluation of the model.

The progress status T3360 is a value indicative of the progress status of the learning/evaluation of the model. This value may be expressed by, for example, percentage such as "100%" or may be expressed by a character string such as "dataset being processed," "learning being executed," and "completed."

The start time T3370 indicates the time of day at which the learning/evaluation of the model was started and the end time T3380 indicates the time of day at which the learning/evaluation of the model was completed. The start time may be, and is not limited to, the time of day at which the learning/evaluation control program P5000 received the request of execution of the model learning from the model management computer 3100. The end time may be, and is not limited to, the time of day at which the learning/evaluation execution program P5100 detected completion of the execution of the learning program file F3000.

The dependent job T3390 indicates the identifier of the learning/evaluation job on which the corresponding learning/evaluation job is dependent when the learning/evaluation job is dependent on another learning/evaluation job.

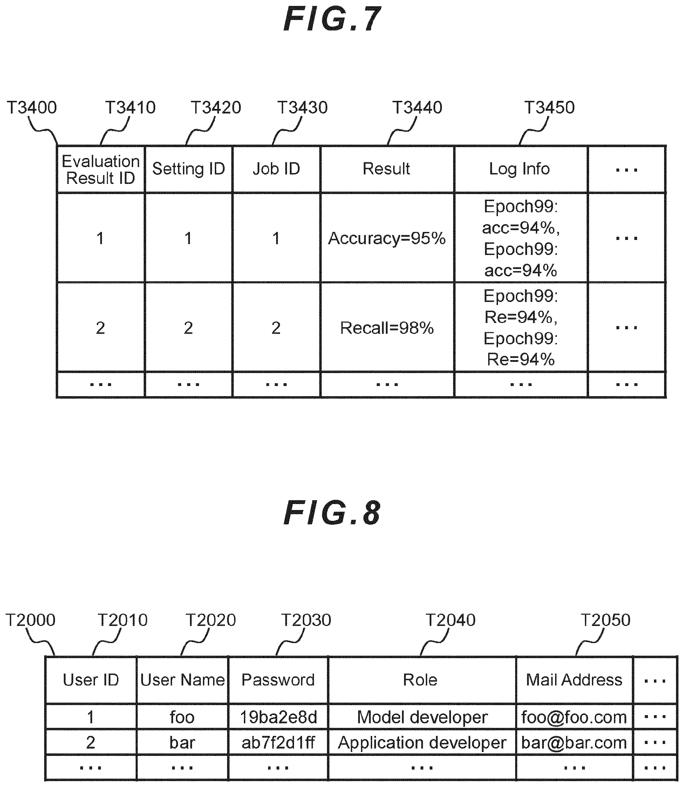

FIG. 7 is a diagram illustrating an example of format of the evaluation result table T3400.

The evaluation result table T3400 includes information indicative of what the result of the execution of the evaluation of the model was.

The evaluation result table T3400 has a record for each evaluation result. The records each include pieces of information such as an evaluation result identifier T3410, a setting identifier T3420, a job identifier T3430, a result T3440, and log information T3450.

The evaluation result identifier T3410 is an identifier for uniquely identifying the evaluation result.

The setting identifier T3420 is an identifier for identifying the information on which program and which setting were used to execute the evaluation (for example, the value of the setting identifier T3205 held in the learning/evaluation setting table T3200).

The job identifier T3430 is an identifier for identifying the information on which learning/evaluation execution computer 5200 executed the evaluation of the model (for example, the value of the job identifier T3310 held in the learning/evaluation job table T3300).

The result T3440 includes the information indicative of what kind of result was obtained from the evaluation of each model. This information includes, for example, a result value for the value of the parameter T3220, which indicates, which indicator the user intended to draw on to request the evaluation amongst the pieces of the evaluation setting information held by the learning/evaluation setting table T3200. This result value may be, and is not limited to, a value collected from the log information that is output by the evaluation program file F3100 which is executed by the learning/evaluation execution program P5100, or may be a value read from the standard output which is output by the evaluation program file F3100.

The log information T3450 includes information indicative of the log related to the evaluation of the model. This information may include, for example, the content of the logs, standard outputs, and standard error outputs output by the learning/evaluation control program P5000, the learning/evaluation execution program P5100, and the evaluation program file F3100.

FIG. 8 is a diagram illustrating an example of format of the user management table T2000.

The user management table T2000 includes information on the user using the marketplace system 2000 such as the application developer 1000 and the model developer 1020.

The user management table T2000 has a record for each user. The records each include pieces of information such as a user identifier T2010, a user name T2020, a password T2030, a role T2040, and a mail address T2050.

The user identifier T2010 is an identifier for identifying the user.

The user name T2020 and the password T2030 are pieces of information, for example, used as authentication information for the user to access the marketplace system 2000 via a browser or the like included in the application development computer 1010 or the model development computer 1030. Note that the user name T2020 may be displayed, for example, as the name of the developer who developed the model in the model information G2010 provided on the model details screen G2000.

The role T2040 is a value that indicates what role the user has. As the value, for example, "Model developer" which refers to the model developer 1020 who develops the model and "Application developer" which refers to the application developer 1000 who develops the application software may be adopted. Note that, as the value of the role T2040, a value that refers to the administrator who manages the marketplace system 2000 may also be adopted.

The mail address T2050 is a piece of information indicative of the mail address of the user. This information is displayed, for example, as the name of the developer who developed the model in the model information G2010 provided on the model details screen G2000 and other users may be allowed to contact the model developer.

FIG. 9 is a diagram illustrating an example of format of the tenant management table T2100.

The tenant management table T2100 includes information on the tenant which is a group of one or more users using the marketplace system 2000 such as the application developer 1000 and the model developer 1020.

The tenant management table T2100 has a record for each tenant. The records each include pieces of information such as a tenant identifier T2110, a tenant name T2120, a group user identifier T2130, and an administrator user identifier T2140.

The tenant identifier T2110 is an identifier for identifying the tenant.

The tenant name T2120 is a value indicative of the name of the tenant (for example, a character string).

The group user identifier T2130 includes the identifier or identifiers of one or more users belonging to the tenant.

The administrator user identifier T2140 is the individual identifier or identifiers of one or more users managing the tenant.

FIG. 10 is a diagram illustrating an example of format of the dataset management table T4000.

The dataset management table T4000 includes information for managing dataset necessary when creating a model to be registered in the model management system 3000 or performing evaluation of the model.

The dataset management table T4000 has a record for each dataset. The records each include pieces of information such as a dataset identifier T4010, a dataset file T4020, a description T4030, a charge information T4040, a user information T4050, a tenant information T4060, a disclosure condition T4070, and a use condition T4080.

The dataset identifier T4010 is an identifier for uniquely identifying the dataset.

The dataset file T4020 is the file name of the file that the user specified on the dataset registration screen G5000 when registering the dataset via the dataset registration screen G5000 (alternatively, the value automatically assigned by the data management program P4000).

The description T4030 indicates, for example, the explanatory text of the dataset displayed on the model generation/evaluation registration screen G3000.

The charge information T4040 is a value indicative of the amount of payment or the like the user has to bear when performing learning/evaluation using the dataset.

The user information T4050 indicates the identifier of the user who registered the dataset using the dataset registration screen G5000.

The tenant information T4060 indicates the identifier of the tenant to which the user belongs who registered the dataset using the dataset registration screen G5000.

The disclosure condition T4070 is a value that controls the scope of the users, tenants, etc. to which the dataset is allowed to be disclosed.

The use condition T4080 is a value that controls the location of execution or the like when performing the learning/evaluation of the model using the dataset registered in the data management system 4000.

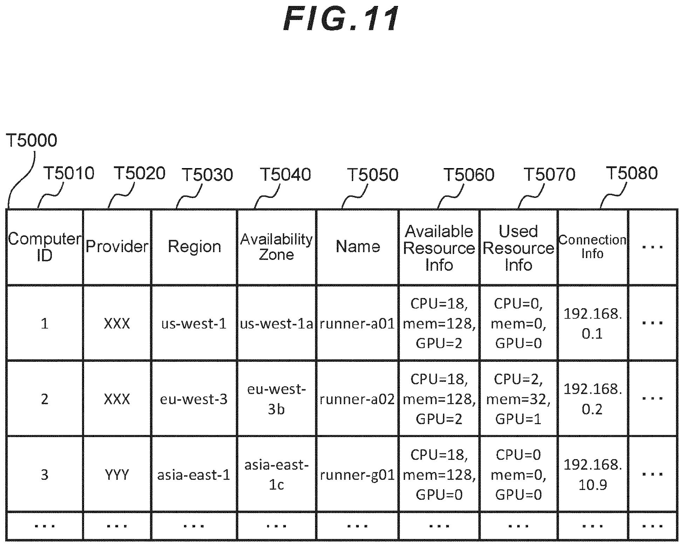

FIG. 11 is a diagram illustrating an example of format of the computer management table T3800.

The computer management table T3800 includes pieces of computer information such as: a service vendor which provides the learning/evaluation execution computer 5200; the region of the computer environment, the name of the computer, available resource information indicative of the performance of the resources (for example, the CPU 1930 and the GPU 1970); resource consumption information; and information needed to connect to the computer.

The computer management table T5000 has a record for each computer. The records each include pieces of information such as a computer identifier T5010, a provider T5020, a region T5030, an availability zone T5040, a name T5050, an available resource information T5060, a resource consumption information T5070, and a connection information T5080.

The computer identifier T5010 is an identifier for identifying the computer.

The provider T5020 is an identifier for identifying the provider (for example, cloud service provider) of the computer.

The region T5030 is an identifier that identifies the region to which the computer belongs.

The availability zone T5040 is a piece of information indicative of the geographical category of the computer within the region.

The name T5050 is the name of the computer (for example, an identifier used to define the computer in the provider). The name may be described in the text format or may be any appropriate identifier defied by the provider such as UUID.

The available resource information T5060 is a piece of information indicative of the performance of the resources provided in the computer (for example, CPU 1930, memory 1920, GPU 1970).

The resource consumption information T5070 is a piece of information indicative of the resource capability which indicates the used portion of the resource capability indicated by the available resource information T5060, which has been used as a result of the fact that the learning/evaluation execution program P5100, the learning program file F3000, or the evaluation program file F3100 were executed by the computer. For example, the resource consumption information T5070 may be updated by the learning/evaluation control program P5000 monitoring the computer.

The connection information T5080 is a piece of information enabling identification of the computer on the network 1200. This information may be, and is not limited to, connection information (for example, Internet Protocol(IP) address, Uniform Resource Identifier (URI), etc.) needed when the learning/evaluation control program P5000 transmits the request of the learning/evaluation.

An example of the processing performed in accordance with this feature combination will now be described below.

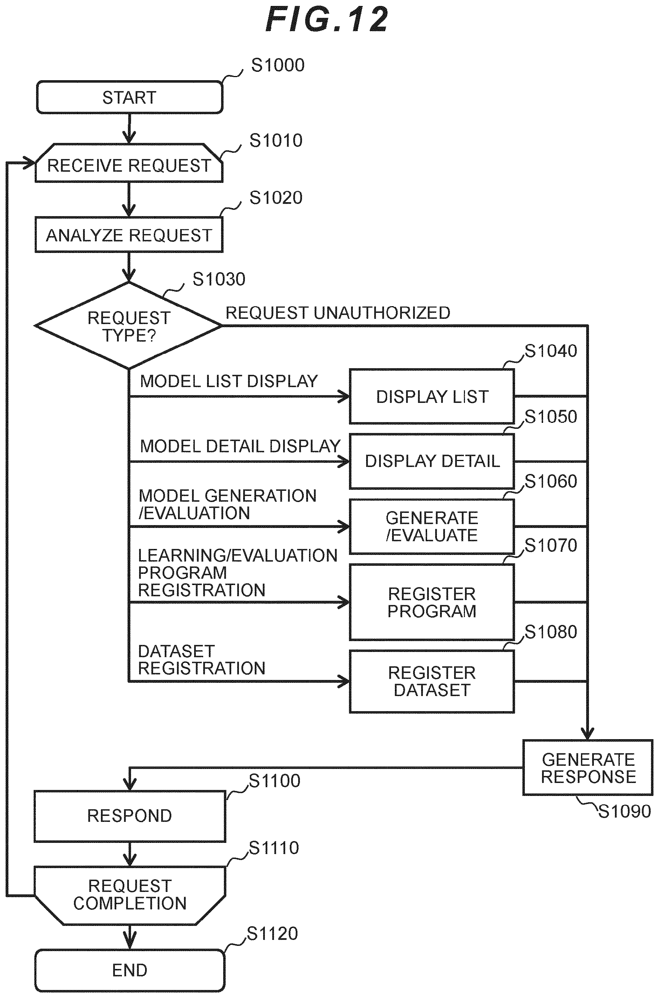

FIG. 12 is a flowchart that illustrates the processing in which: the IF program P2000 provided in the IF computer 2100 receives a request from the application developer 1000 or the model developer 1020, which has been transmitted via the application development computer 1010 or the model development computer 1030; executes the process in response to the received request; and transmits a response.

When the IF program P2000 is executed, the IF program P2000 starts waiting for reception of the request at the step S1000. The request includes, for example, the request type (for example, registration of the learning program in the marketplace system 2000, creation of a model using the learning program, or acquisition of a registered model), and various pieces of information (for example, the identifier of the model, the identifier of the user who has issued the request).

At the step S1010, when the IF program P2000 has received the request, the process proceeds to the step S1020.

At the step S1020, the IF program P2000 analyzes the information included in the received request (for example, the request type, the model identifier, the user identifier, etc.). Note that, for example, a process for checking validity of the format and content of the information such as the request type and the model identifier may be performed at the step S1020.

At the step S1030, the IF program P2000 determines the request type specified in the request. The next step will be decided on according to the type that has been determined. Note that, when it has been determined that the request is not valid as a result of the checking performed at the step S1020, then the process proceeds to the step S1090, where the IF program P2000 may generate a response indicative of the invalidity of the request.

When the result of the determination indicates that the request type is model list display, then the process proceeds to the step S1040. At the step S1040, the IF program P2000 acquires all pieces of information of all the records of the model management table T3000 so as to collect information necessary for the model list screen G1000. After that, the process proceeds to the step S1090.

When the result of the determination indicates that the request type is model details display, then the process proceeds to the step S1050. At the step S1050, the IF program P2000, in order to acquire information necessary for the model details screen G2000, acquires the model identifier of the model whose details are to be displayed from the request that has been analyzed in the step S1020, and collects the model information corresponding to this model identifier from the model management table T3000. After that, the process proceeds to the step S1090.

If the result of the determination indicates that the request type is model generation/evaluation, then the process proceeds to the step S1060. At the step S1060, the IF program P2000 acquires, from the request analyzed at the step S1020, the learning/evaluation setting information necessary for execution of the model generation/evaluation, and adds to the learning/evaluation setting table T3200 a new record based on the acquired learning/evaluation setting information. Further, the IF program P2000 transmits the setting identifier T3205 included in the added record to the learning/evaluation control program P5000 provided in the learning/evaluation control computer 5100. After that, the process proceeds to the step S1090.

If the result of the determination indicates that the request type is registration of the learning/evaluation program, then the process proceeds to the step S1070. At the step S1070, the IF program P2000 acquires the learning/evaluation program information necessary for the registration of the learning/evaluation program from the request that has been analyzed at the step S1020, and adds, to the learning/evaluation program management table T3100, a new record based on the acquired learning/evaluation program information. After that, the process proceeds to the step S1090.

If the result of the determination indicates that the request type is dataset registration, then the process proceeds to the step S1080. At the step S1080, the IF program P2000 acquires the dataset information from the request analyzed at the step S1020, and adds to the dataset management table T4000 a new record based on the acquired dataset information. The process then proceeds to the step S1090.

At the step S1090, the IF program P2000 generates response data (for example, response data including information of the model list screen, the result of the model generation/evaluation, etc.) to be transmitted to the caller computer (the source of transmission of the request), where the response data is generated on the basis of the data collected in response to the request.

At the step S1100, the IF program P2000 calls the response data that has been generated at the step S1090 and transmits the response data to the original computer. After that, the process proceeds to the step S1110.

At the step S1110, the IF program P2000 checks whether or not there is any end request to end the IF program P2000 from the OS or the like. If no end request exists, then the process goes back to the step S1010. If an end request has been found, then the process proceeds to the step S1120, where the IF program P2000 ends.

Note that the request analyzed at the step S1020 may include acquisition or updating of the user information of the application developer 1000 and the model developer 1020; forcible termination of the model generation process or the model evaluation process being executed, and any other type or types that are not explicitly illustrated in the figures. Also, the constituent elements of the screens may be implemented by an API that has a parameter that corresponds to the input and output items of the screens.

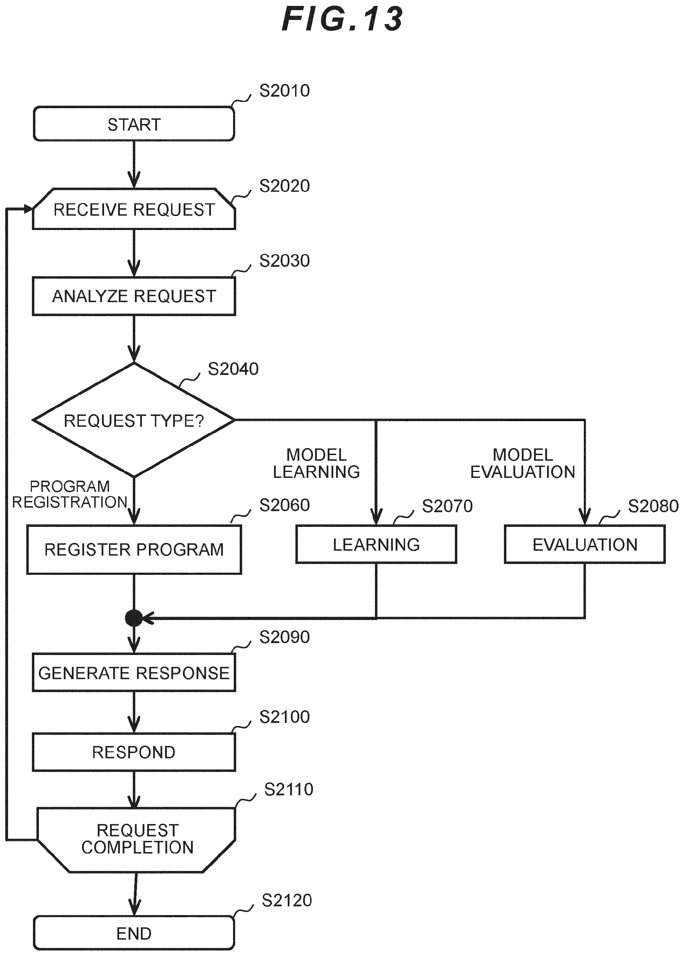

FIG. 13 is a flowchart that illustrates the steps of the model management program P3000 provided in the model management computer 3100 to perform, in accordance with the request received from the IF program P2000, the process of registration of the learning/evaluation program or the model learning process, or the model evaluation process.

When the model management program P2100 is executed, the model management program P3000 starts waiting for reception of the request at the step S2010. After that, the process proceeds to the step S2020. This request includes information necessary for the processing such as the request type (for example, registration of the learning/evaluation program, model learning, model evaluation, etc.).

When the model management program P3000 has received the request at the step S2020, the process proceeds to the step S2030.

At the step S2030, the model management program P3000 analyzes the received request. After that, the process proceeds to the step S2040.

At the step S2040, the model management program P3000 determines whether or not the request type specified in the analyzed request is registration of the learning/evaluation program, learning of the model, or evaluation of the model. If the request type is the registration of the learning/evaluation program, then the process proceeds to S2060. If the request type is the learning of the model, then the process proceeds to S2070. If the request type is the evaluation of the model, then the process proceeds to S2080. Note that, if the request type is not the registration of the learning/evaluation program, the model learning, or the model evaluation, then the process may proceed to the step S2090, where response data to the effect that the request is not correct may be generated.

At the step S2060, in order to register the learning/evaluation program designated in the request in the model management system 3000, the model management program P3000 adds a new record based on the learning/evaluation program information included in the request analyzed at the step S2030 to the learning/evaluation program management table provided in the model management system 3000. At this point, the model management program P3000 may check if there is any record of the learning/evaluation program having the same name or the same file. If such a record exists, then the model management program P3000 may generate response data indicative of this fact at the step S2090.

At the step S2070, in order to conduct the model learning, the model management program P3000 registers the learning setting information included in the request in the model management system 3000 and transmits a request to start the learning to the learning/evaluation system 5000.

At the step S2070, the model management program P3000 adds the new record, which is based on the learning setting information included in the request which has been analyzed in the step S2030, to the learning/evaluation setting table T3200 held by the model management system 3000.

Specifically, for example, first, the model management program P3000 acquires the program identifier, the dataset identifier, the parameter, and the model identifier from the request, and adds a new record based on the pieces of information that have been acquired to the learning/evaluation setting table T3200. At this point, the setting identifier may be automatically set by the model management program P3000.

Subsequently, the model management program P3000 acquires the record of the corresponding program as the learning program information from the program management table T3100 among the pieces of learning setting information acquired at the step S2030, where the record is acquired using the program identifier T3205 as the key. Subsequently, the model management program P3000 acquires the record of the corresponding dataset as the dataset information from the dataset management table T4000 among the pieces of learning setting information acquired at the step S2030, where the record is acquired using the dataset identifier T3215 as the key. Note that, if multiple values are specified in the dataset identifier T3215, then the process will be repeated for the number of rounds corresponding to the number of the values and the dataset information will be acquired on a per-value basis.

Subsequently, the model management program P3000 acquires the execution condition included in the acquired learning program information. Also, the model management program P3000 acquires the execution condition of the dataset from the respective acquired pieces of dataset information. After all the execution conditions have been acquired, the model management program P3000 computes a logical product of them, and retains the learning setting information that includes the computed logical product as the execution condition T3240 held by the learning/evaluation setting table T3200. Note that in the case where the result of the logical product is invalid, at the step S2090, response data indicative of this fact may be generated.

Also, the model management program P3000 stores the model identifier of the model generated as a result of the learning as the model identifier T3245 included in the learning/evaluation setting table T3200. The model identifier is the model identifier T3005 held in the model management table T3000, and is set by the model management program P3000. Further, the model management program P3000 sets the value of the setting type T3245 held in the learning/evaluation setting table T3200 to "learning" to indicate that the setting is set to the learning.

After completion of the computation of the execution condition, the model management program P3000 issues, to the learning/evaluation system 5000, a learning request along with the setting identifier of the corresponding learning/evaluation setting information.

At the step S2080, in order to conduct the model evaluation, the model management program P3000 registers the evaluation setting information included in the request in the model management system 3000 and transmits a request to start the evaluation to the learning/evaluation system 5000. At the step S2080, the model management program P3000 adds a new record based on the evaluation setting information included in the request analyzed at the step S2030 to the learning/evaluation setting table T3200 held by the model management system 3000.

Specifically, for example, first, the model management program P3000 acquires the program identifier, the dataset identifier, the parameter, and the model identifier from the request, and adds a new record based on the pieces of information that have been acquired to the learning/evaluation setting table T3200.

Subsequently, the model management program P3000 acquires the record of the corresponding program as the learning program information from the program management table T3100 among the pieces of evaluation setting information acquired at the step S2030, where the record is acquired using the program identifier T3205 as the key. Subsequently, the model management program P3000 acquires the record of the corresponding dataset from the dataset management table T4000 as the dataset information among the pieces of evaluation setting information acquired at the step S2030, where the record is acquired using the dataset identifier T3215 as the key. Note that in the case where multiple values are specified in the dataset identifier T3215, then the process will be repeated for the number of rounds corresponding to the number of the values and the dataset information will be acquired on a per-value basis.

Subsequently, the model management program P3000 acquires the execution condition included in the acquired evaluation program information. Also, the model management program P3000 acquires the execution condition of the dataset from the respective acquired pieces of dataset information. After all the execution conditions have been acquired, the model management program P3000 computes a logical product of them, and stores the evaluation setting information including the computed logical product as the execution condition T3240 held by the learning/evaluation setting table T3200. Note that response data indicative of this fact may be generated at the step S2090 in the case where the result of the logical product is invalid.

Also, the model management program P3000 stores the model identifier of the model to be subjected to this evaluation as the model identifier T3245 included in the learning/evaluation setting table T3200. Further, the model management program P3000 sets the value of the setting type T3245 held in the learning/evaluation setting table T3200 to "evaluation" to indicate that the setting is set to the evaluation.

After completion of the setting of the execution condition, the model management program P3000 issues to the learning/evaluation system 5000 an evaluation request along with the setting identifier of the corresponding learning/evaluation setting information.

At the step S2090, the model management program P3000 generates the response data to the IF program P2000 (for example, response data indicative of whether or not the request of registration of the learning/evaluation program, model learning, or model evaluation has been successful, or response data indicative of whether or not the received request information is incorrect and the request failed, or any other similar or relevant response data). After that, the process proceeds to the step S2100.

At the step S2100, the model management program P3000 returns, as a response, the generated response data to the IF program P2000 which is the request transmission source. After that, the process proceeds to the step S2110.

At the step S2110, the model management program P3000 checks whether or not there is any end request to end the model management program P2100 from the OS or the like provided in the model management computer 3100. If no end request exists, then the process goes back to the step S2020. If the end request has been found, then the process proceeds to the step S2120, where the model management program P3000 ends.

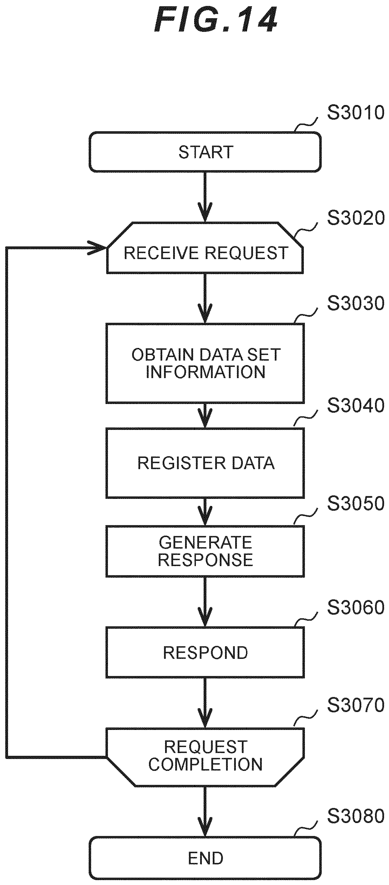

FIG. 14 is a flowchart that illustrates the steps of the data management program P4000 provided in the data management system 4000 to perform the registration process to register the dataset in accordance with the request received from the IF program P2000.

When the data management program P4000 is executed, data management program P4000 starts waiting for reception of the request at the step S3010. After that, the process proceeds to the step S3020.

At the step S3020, when the data management program P4000 has received the request, the process proceeds to the step S3030.

At the step S3030, the data management program P4000 analyzes the received request (for example, a request with which the dataset file or the like to be registered is associated) and acquires dataset information from the request. After that, the process proceeds to the step S3040.

At the step S3040, in order to register the dataset file associated with the request in the data management system 4000, the data management program P4000 adds a new record based on the dataset information included in the request to the dataset management table T4000 provided in the data management system 4000. At this point, the data management program P4000 may check whether or not there exists any record of the dataset having the same name or the same dataset file. If such a record exists, then the data management program P4000 may generate response data indicative of this fact at the step S3050.

At the step S3050, the data management program P4000 generates the response data to the IF program P2000 (for example, response data indicative of whether or not the registration of the dataset has been successful, or response data indicative of whether or not the received request information has some deficiency and the request failed). After that, the process proceeds to the step S3060.

At the step S3060, the data management program P4000 returns, as a response, the generated response data to the IF program P2000 which is the request transmission source. After that, the process proceeds to the step S3070.

At the step S3070, the data management program P4000 checks whether or not there is any end request to end the data management program P4000 from the OS or the like provided in the data management computer 4100. If no end request exists, then the process goes back to the step S3020. If the end request has been found, then the process proceeds to the step S3080, where the data management program P4000 ends.

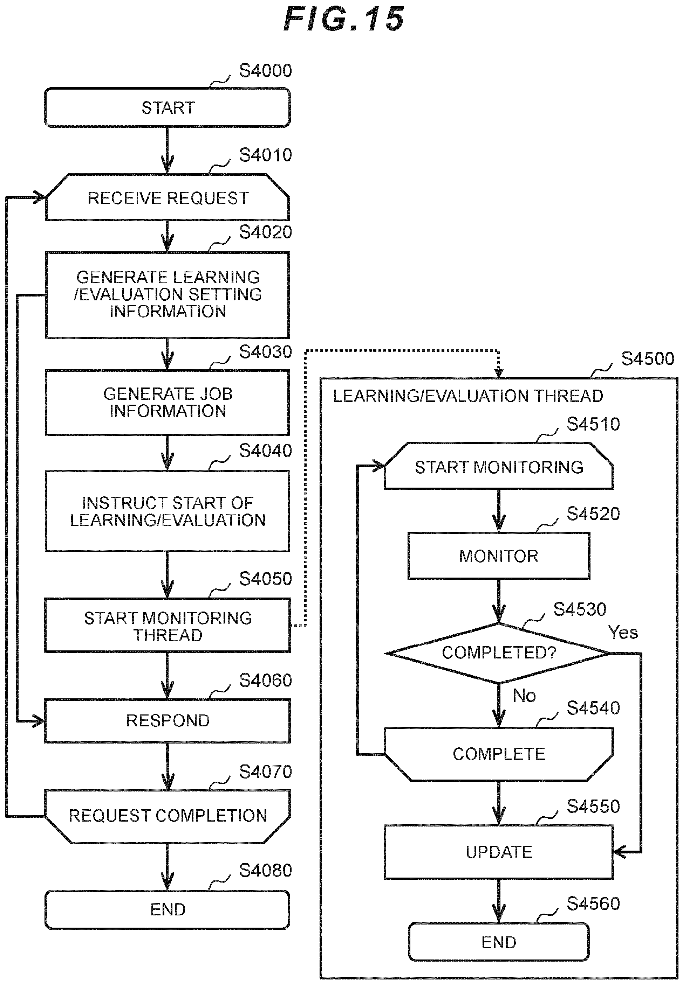

FIG. 15 is a flowchart that illustrates the processing in which the learning/evaluation control program P5000 provided in the learning/evaluation control computer 5100 carries out the preparation of the program or data used in the learning/evaluation and selection of the learning/evaluation execution computer 5200 which executes the learning/evaluation in accordance with the request received from the model management program P3000, and requests learning/evaluation execution to the selected learning/evaluation execution computer 5200.

When the learning/evaluation control program P5000 is executed, the learning/evaluation control program P5000 starts waiting for reception of the request at the step S4000. After that, the process proceeds to the step S4010. Note that the request includes the setting information regarding the learning/evaluation entered by the model generation/evaluation screen G3000.

At the step S4010, when the learning/evaluation control program P5000 has received the request, the process proceeds to the step S4020.

At the step S4020, the learning/evaluation control program P5000 acquires setting information regarding the learning/evaluation included in the request, and creates learning/evaluation setting information for registration in the learning/evaluation setting table T3200. At the step S4020, first, the learning/evaluation control program P5000 acquires the execution condition of the program from the learning program information or the evaluation program information included in the request. Subsequently, the learning/evaluation control program P5000 acquires the individual execution conditions from one or more pieces of dataset information included in the request. The learning/evaluation control program P5000 carries out operation to obtain a logical product of the acquired program execution conditions and the dataset execution condition and acquires the execution condition of the learning/evaluation using the program and the dataset. At this point, the result of the logical product is null, then the learning/evaluation control program P5000 cannot perform the learning/evaluation using the designated program and the dataset, and it creates the information indicative of this fact and the process proceeds to the step S4060. If the result of the logical product is not null, then the learning/evaluation control program P5000 stores the information included in the request as the learning/evaluation setting information in the learning/evaluation setting table T3200 along with the result of operation of the logical product of the execution conditions, and the process proceeds to the step S4030. For example, in the case where two datasets are fed back from the application developer 1000 to the application software X developed by the model developer 1020 and the model developer 1020 wants to perform the learning/evaluation on the application software X using the two datasets, operation to obtain a logical product of the execution condition of the dataset and the execution condition of the program used in the learning/evaluation of the application software X is conducted for each of the two datasets. It is made possible to carry out the learning/evaluation on the application software X using the dataset having a logical attribute which is not null.

At the step S4030, the learning/evaluation control program P5000 selects the computer that performs the learning/evaluation on the basis of the execution condition specified by the learning/evaluation setting information, the required specification, and the status of the computer and, after that, creates the learning/evaluation job information for managing the status of learning/evaluation of the model and registers it in the learning/evaluation job table T3300.

At the step S4030, the learning/evaluation control program P5000, first, analyzes the learning/evaluation setting information created at the step S4020, and acquires the information of the execution condition field T3240 indicative of the execution allowability condition of the learning/evaluation. Also, the learning/evaluation control program P5000 acquires the program identifier T3210 from the learning/evaluation setting information and, by using this identifier as the key, extracts information of the corresponding program from the learning/evaluation program management table T3100. The learning/evaluation control program P5000 acquires, from the extracted information, the required specification T3150 indicative of the amount of resources necessary for execution of the program. Subsequently, the learning/evaluation control program P5000 acquires, from the computer management table T5000, the computer identifier T5010 of the learning/evaluation execution computer 5200 which satisfies the condition indicated by the execution condition T3240. When multiple computers are found which satisfy the condition, then multiple computer identifiers T5010 may be acquired. Subsequently, the learning/evaluation control program P5000, by using the acquired computer identifier T5010 as the key, acquires the available resource information T5060 and the resource consumption information T5070 from the computer management table T5000, and computes the usable resource information on the basis of these pieces of information T5060 and T5070. The usable resource information can be determined, for example, by, for each resource type, subtracting the value indicated by the resource consumption information T5070 from the value indicated by the available resource information T5060. When the learning/evaluation control program P5000 compares the usable resource information with the above-described acquired required specification T3150, the computer identifier of the computer which can meet the required specification T3150 is allowed to be acquired. When the multiple computers identifier has been successfully acquired, then the learning/evaluation control program P5000 acquires (selects) one computer identifier, for example, by using a certain indicator such as selecting the computer identifier of the computer having the largest usable resource information. The learning/evaluation execution computer 5200 identified from the acquired computer identifier T5010 should serve as the computer that performs the processing of this request (job execution computer).

Subsequently, the learning/evaluation control program P5000 adds a new record to the learning/evaluation job table T3300 in order to record the status of execution (status of learning/evaluation of the model) performed by the job execution computer. Note that, in the record to be added, the setting identifier T3320 is a setting identified of the setting information acquired at the step S4020; the user identifier T3330 is an identifier of the user who requested this job among the user identifiers included in the user management table T2000; the tenant identifier T3340 is an identifier of the tenant to which the user who requested the job belongs among the tenant identifiers included in the tenant management table T2100; the execution computer identifier T3350 is a computer identifier of the job execution computer (learning/evaluation execution computer 5200) determined at the step S4030; the value of the progress status T3360 is "0%; the value of the start time T3370 indicates the current time; and the value of the end time T3380 is, for example, "-." Note that the value of the job identifier T3310 is given and recorded by the learning/evaluation control program P5000.

At the step S4040, the learning/evaluation control program P5000 transmits, to the selected learning/evaluation execution computer 5200, a request (request to execute the learning/evaluation of the model) corresponding to the request from the model management program P3000, and the process proceeds to the step S4050. The request is transmitted to the learning/evaluation execution program P5100 provided in the learning/evaluation execution computer 5200. Identification of the learning/evaluation execution computer 5200 may be performed using the value of the connection information T5080 held in the computer management table T5000 (for example, IP address). Note that the transmitted request includes, for example, a setting identifier and a job identifier.

At the step S4050, the learning/evaluation control program P5000 starts the learning/evaluation monitoring thread S4500 in order to monitor the status of the learning/evaluation job executed by the learning/evaluation execution computer 5200. After execution of the step S4510, the process proceeds to the step S4060. In other words, by the thread S4500, the steps at and after S4060 and the steps S4510 to S4560 are executed in parallel with each other within the learning/evaluation execution computer 5200.

At the step S4060, the learning/evaluation control program P5000 generates response data for the model management program P3000 which requested the learning/evaluation of the model, and transmits the response data to the model management program P3000. After that, the process proceeds to the step S4070. Note that the transmitted response data includes, for example, start of execution of evaluation and an error message notifying the fact that an abnormality occurred at a certain step.

At the step S4070, the learning/evaluation control program P5000 checks whether or not there is any end request to the learning/evaluation control program P5000 from the OS or the like provided in the learning/evaluation control computer 5100. If no end request exists, then the process goes back to the step S4010. If the end request has been found, then the process proceeds to the step S4080, where the learning/evaluation control program P5000 ends.

The learning/evaluation monitoring thread S4500 starts status monitoring on the executed job at the step S4510. After that, the process proceeds to the step S4520.

At the step S4520, the learning/evaluation monitoring thread S4500 sends an inquiry to the learning/evaluation execution computer 5200 about the status of execution of the job having the job identifier, and obtains the response. The value of the response from the learning/evaluation execution computer 5200 may be a status expressed by a character string or numbers such as "being executed" and "stopped," and may be expressed by numbers indicative of the progress such as "10%" and "20%." The learning/evaluation monitoring thread S4500 records the obtained value of response as the progress status T3360 of the learning/evaluation job table T3300. In addition, the learning/evaluation monitoring thread S4500 also collects the used resource statuses of the resources of the learning/evaluation execution computer 5200 (for example, the CPU 1930 and the memory 1920), and updates the used resource status T5070 corresponding to the learning/evaluation execution computer 5200 so that it reflects the information indicative of the collected used resource status. After that, the process proceeds to the step S4530.

At the step S4530, the learning/evaluation monitoring thread S4500 determines whether or not the value of the response takes a value that indicates job completion. If the value is, for example, "completed" or "100%," then the process proceeds to the step S4550. If the value is any other value, the process proceeds to the step S4540 and the process goes back to the step S4510.

At the step S4550, the learning/evaluation monitoring thread S4500 updates the value of the progress status T3360 of the learning/evaluation job table T3300 to "100%" or "completed." After that, the process proceeds to the step S4560, where the thread S4500 ends.

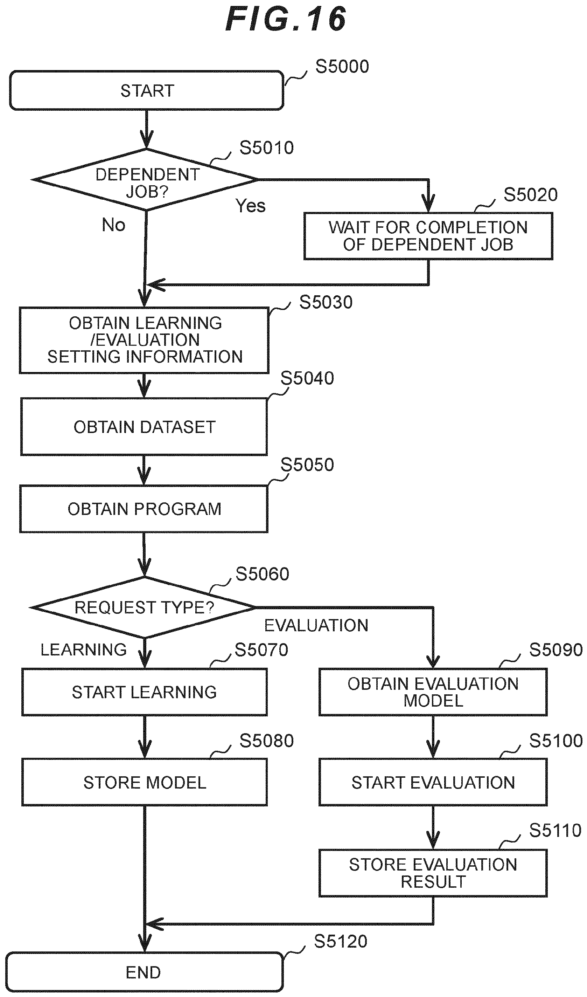

FIG. 16 is a flowchart that illustrates the steps in which the learning/evaluation execution program P5100 provided in the learning/evaluation execution computer 5200 performs the learning/evaluation of the model in accordance with the request received from the learning/evaluation control program P5000.

When the learning/evaluation execution program P5100 is executed, the learning/evaluation execution program P5100 at the step S5000, receives the request from the learning/evaluation control program P5000. After that, the process proceeds to the step S5010.

At the step S5010, the learning/evaluation execution program P5100 acquires the corresponding job information from the learning/evaluation job table T3300, where the job information is acquired using the job identifier included in the request as the key. Subsequently, the learning/evaluation execution program P5100 checks the dependent job T3390 of the acquired job information. If a dependent job is set, then the process proceeds to the step S5020, where the learning/evaluation execution program P5100 waits for completion of the dependent job and, after the dependent job has been completed, the process proceeds to the step S5030. If no dependent job is set, then the step S5020 is skipped and the process proceeds to the step S5030.

At the step S5030, the learning/evaluation execution program P5100 acquires the corresponding setting information from the learning/evaluation setting table T3200 by using as the key the setting identifier included in the job information that has been acquired at the step S5010.

At the step S5040, the learning/evaluation execution program P5100 acquires, via the data management program P4000, the dataset file F4000 identified from the dataset identifier T3215 included in the setting information acquired at the step S5030. After that, the process proceeds to the step S5050.

At the step S5050, the learning/evaluation execution program P5100 acquires the program file F3000 or F3100 identified from the program identifier T3210 included in the acquired setting information, where the program file F3000 or F3100 are acquired via the model management program P3000. After that, the process proceeds to the step S5060.

At the step S5060, the learning/evaluation execution program P5100 acquires the setting type T3250 included in the acquired setting information. If the value of the setting type T3250 is "learning," then the process proceeds to the step S5070. If the value of the setting type T3250 is "evaluation," then the process proceeds to the step S5090.

At the step S5070, the learning/evaluation execution program P5100 executes the program by using the acquired dataset file F4000, the acquired program file F3000, and the parameter T3220 included in the acquired setting information as the input to the acquired program file F3000, and thereby starts learning of the model. After completion of the program, the process proceeds to the step S5080.

At the step S5080, the learning/evaluation execution program P5100 acquires the model identifier T3245 included in the acquired setting information, and registers the information of the model file created at the step S5070 in the record the model management table T3000 including the model identifier T3005 that agrees with the identifier. After that, the process proceeds to the step S5120.

At the step S5090, the learning/evaluation execution program P5100 acquires the model identifier T3245 included in the acquired setting information, and, using the identifier as the key, acquires the model information of the evaluation target (information including the model file T3020) from the model management table T3000. After that, the process proceeds to the step S5100.

At the step S5100, the learning/evaluation execution program P5100 executes the program by using the acquired dataset file, the acquired program file, the model file identified from the acquired model file T3020, and the parameter T3220 included in the acquired setting information as the inputs to the acquired program, and thereby starts evaluation of the model. After completion of the program, the process proceeds to the step S5110.

At the step S5110, the learning/evaluation execution program P5100 acquires the evaluation result information at the step S5100, for example, via a log file output by the program, a standard output, or a standard error output, and adds a new record based on the evaluation result information in the evaluation result table T3400. After that, the process proceeds to the step S5120. Note that, in the record to be added, the value of the setting identifier T3420 is the setting identifier included in the request; the value of the job identifier T3430 is the job identifier included in the request; the value of the result T3440 is the acquired evaluation result information; and the value of the log information T3450 is, for example, the content of the log file or standard output that has been output by the program.

At the step S5120, the learning/evaluation execution program P5100 ends.

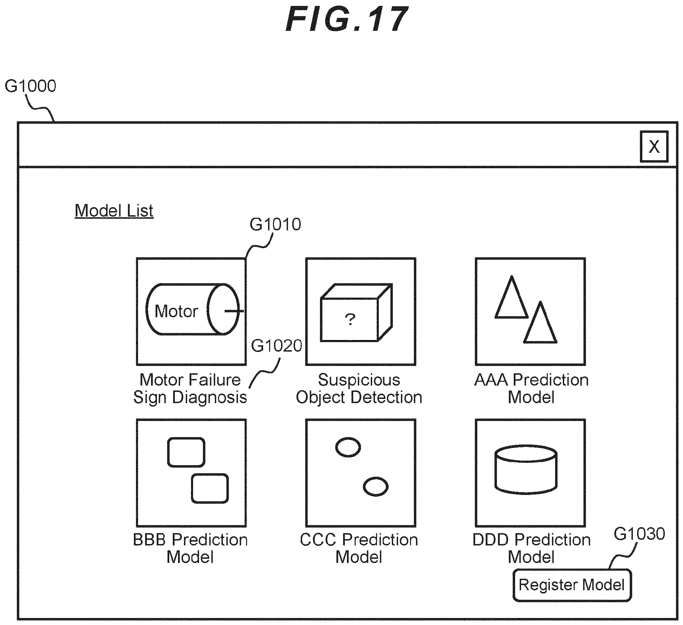

FIG. 17 illustrates an example of a model list screen presented to the application developer 1000 or the model developer 1020. Note that the screens illustrated in FIGS. 17 to 21 may be a graphical user interface (GUI). Whilst indications on the screen are provided by the IF program P2000 of the IF computer 2100 provided in the marketplace system 2000, at least part of the information displayed on the screen is based upon the multiple tables managed in the model improvement support system 10. The IF program P2000 performs communications with the model management system 3000, the data management system 4000, and the learning/evaluation system 5000 and thereby is allowed to acquire the information. In the screen illustrated in FIGS. 17 to 21, buttons and text boxes are examples of GUI components.

The model list screen G1000 is a screen that displays a list of the models registered by the marketplace system 2000. The screen G1000 includes, for example, one or more model image G1010 registered in the marketplace system, a model name G1020, and a model registration button G1030 for registration of a new model.

The information of the models displayed on the screen G1000 are information acquired from the model management table T3000. For example, the image G1010 is an image indicated by the image information T3045, and the name G1020 is the name indicated by the model name T3010. Note that, if the value of the disclosure condition T3070 held in the model management table T3000 is, for example, "All," then the model is allowed to be disclosed to all users. If the value is "user = 1," then the model is only disclosed when the identifier of the user who accessed the screen G1000 is "1."

The model registration button G1030 is a button for making transition to the model generation/evaluation screen G3000 so as to create a new model using the learning and evaluation program and the dataset and register the new model. The IF program P2000 acquires, by using as the key the user identifier of the user who made the access, the information of the user from the user management table T2000, and may implement control such that the button G1030 is displayed only when the acquired role T2040 is "Model developer" which refers to the model developer.

Transition to the model details screen G2000 may be made by clicking on the image G1010 and the model name G1020 of each model using a mouse pointer.

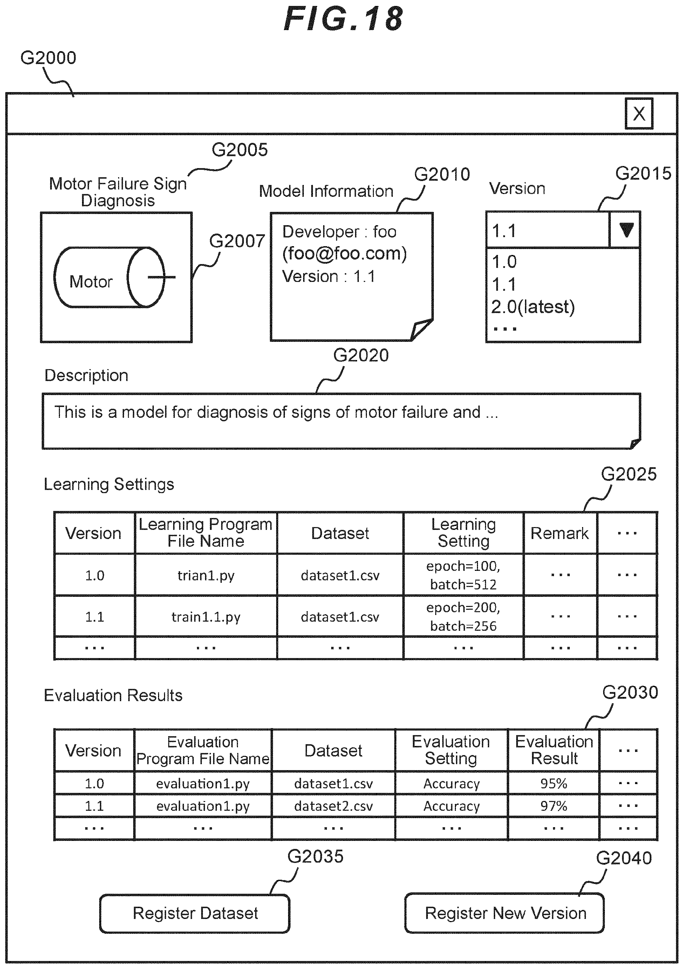

FIG. 18 illustrates an example of the model details screen presented to the application developer 1000 or the model developer 1020.

The model details screen G2000 is a screen that displays the details of the selected model. The screen G2000 includes, for example, a model name G2005, a model image G2007, a model information G2010, a model version G2015, a model overview description G2020, learning setting information G2025, evaluation result information G2030, a dataset registration button G2035, and a new version registration button G2040.

The model name G2005, the model image G2007, and the model overview description G2020 are based on the model name T3010, the image information T3045, and the description T3040 which are included in the model management table T3000. Note that, in addition to those illustrated, for example, charge information T3025 held in the model management table T3000 may be displayed.

The IF program P2000 may display, as the model information G2010, the values of the version information T3015 and, by using as the key the user information T3030 included in the model management table T3000, the user information acquired from the user management table T2000 (the information of the user who developed the target model).

The model version G2015 is a dropdown box for displaying the details of the models of different versions. The IF program P2000 identifies, from the model management table T3000, records whose model group information T3050 takes the same value, and displays the version information T3015 of the model information of the identified records.

The learning setting information G2025 is information related to the learning conducted when the model was created. The IF program P2000 acquires the corresponding learning setting information from the learning/evaluation setting table T3200 by using as the key the learning setting identifier T3055 held in the model management table T3000, and displays the information G2025.

The evaluation result information G2030 includes the evaluation setting information and the evaluation result information of the model. The IF program P2000 acquires the corresponding evaluation setting information and the evaluation result information from the learning/evaluation setting table T3200 and the evaluation result table T3400 by using as the key the evaluation setting identifier T3060 held in the model management table T3000, and displays the acquired information G2030.

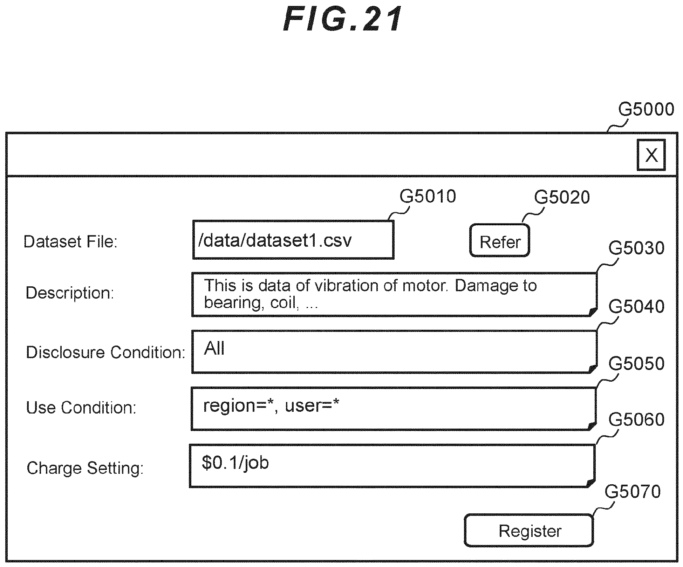

The dataset registration button G2035 is a button used to register a new dataset for improvement of the model by the application developer 1000 or the model developer 1020. In response to the button being pressed, transition to the data registration screen G5000 (FIG. 21) is made.

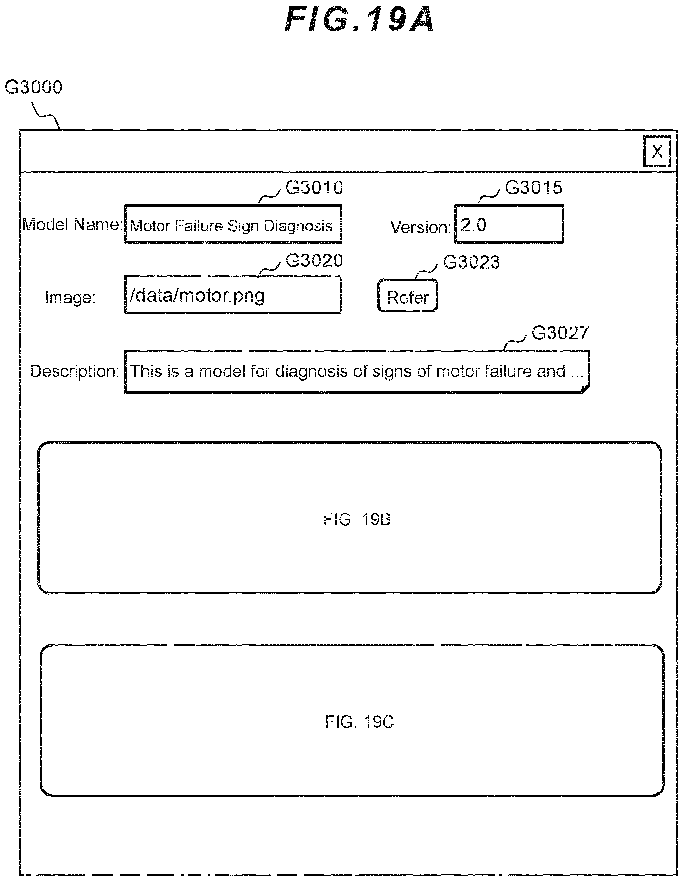

The new version registration button G2040 is a button used to register a new version of the model by the model developer 1020. In response to the button being pressed, transition to the model generation/evaluation screen G3000 (FIG. 19A) is made.

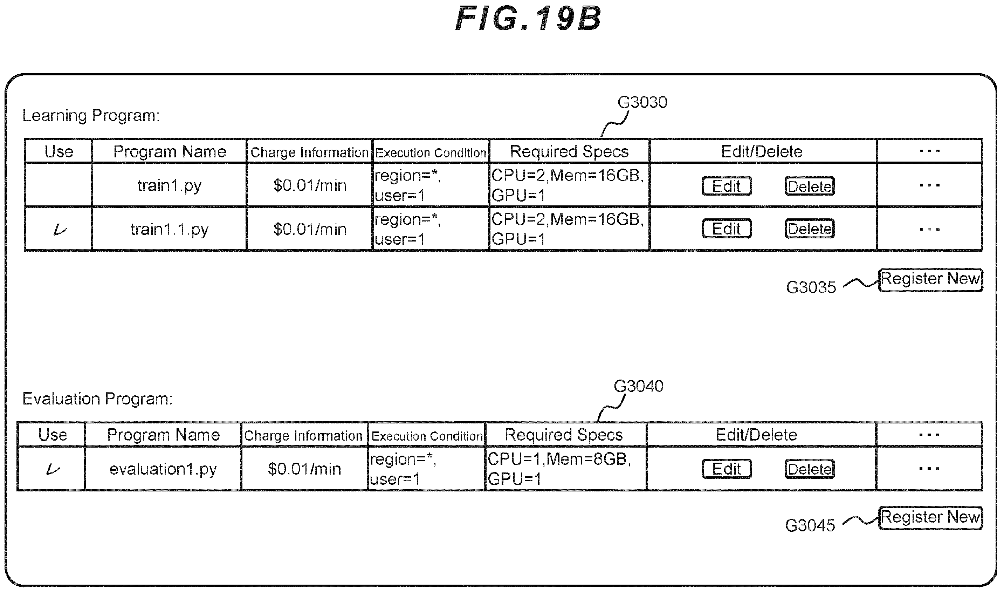

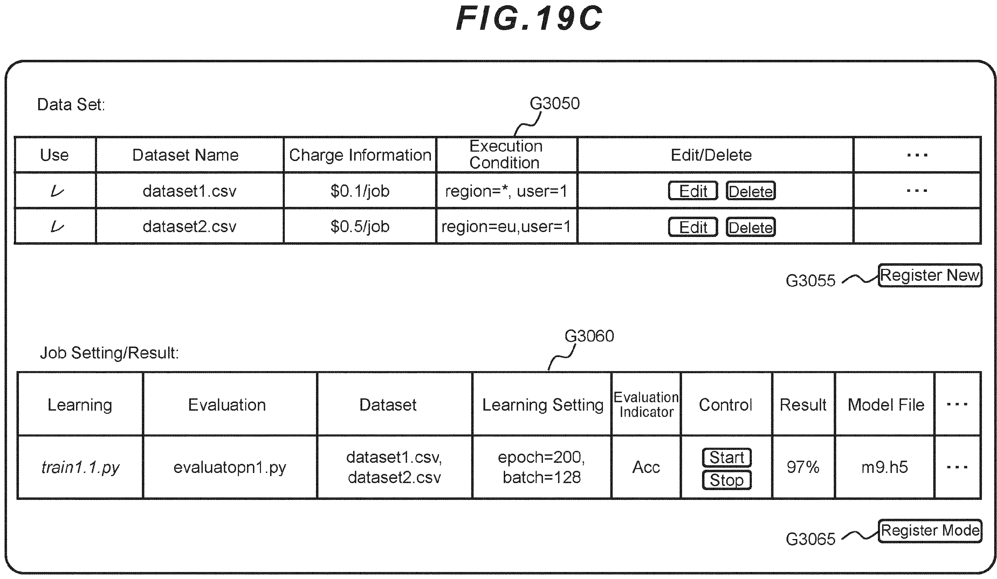

FIG. 19A illustrates an example of the model generation/evaluation screen presented to the model developer 1020. FIG. 19B illustrates part of this screen. FIG. 19C illustrates another part of the screen.

The model generation/evaluation screen G3000 is a screen for performing the learning/evaluation and registering the new model in the marketplace. The screen G3000 includes, for example, a model name entry text box G3010, a model version entry text box G3015, an image path entry text box G3020, an image reference button G3023, a generated model's description entry text box G3027, a learning program table G3030, a learning program new registration button G3035, an evaluation program table G3040, an evaluation program new registration button G3045, a dataset table G3050, a dataset new registration button G3055, a job setting/result table G3060, and a model registration button G3065. Note that, in addition to those mentioned here, for example, the charge information T3025 held in the model management table T3000, and at least part of the disclosure condition T3035 and the execution condition T3070 may be displayed, and at least part of the description T3135 and the disclosure condition T3140 held in the learning/evaluation program management table T3100 may also be displayed.

The model name entry text box G3010 is a text box for entry of the name of the model. The model name T3010 held in the model management table T3000 will reflect the value that has been input.

The model version entry text box G3015 is a text box for entry of the version of the model. The version information T3015 held in the model management table T3000 will reflect the value that has been input.

The image path entry text box G3020 is a text box for entry of a path of a file in the model development computer 1030 for the image file displayed by the model list screen G1000 and the model details screen G2000. The file path entered in this text box may be a file path manually entered or a file path designated by a file selection dialog that pops up in response to the image reference button G3023 being pressed.

The generated model's description entry text box G3027 is a text box for entry of overview description of the model. The description T3040 held in the model management table T3000 will reflect the value that has been input.

The learning program table G3030 is a table that illustrates a list of the learning program available in the model generation. For each row, information of one learning program is displayed. The learning program information displayed in each row may be the information in which the program type T3115 in the learning/evaluation program management table T3100 is set to "learning" (a value indicative of the fact that the program is a learning program). Also, if the value of the disclosure condition T3140 is, for example, "All," then the learning program information may be disclosed to all users. If the value is "user = 1," then the learning program information may be displayed only when the user identifier of the user who displayed this screen is "1." Further, the learning program used by the model developer 1020 may be selected as a result of the model developer 1020 clicking on the use column by a mouse pointer and checking the checkbox.

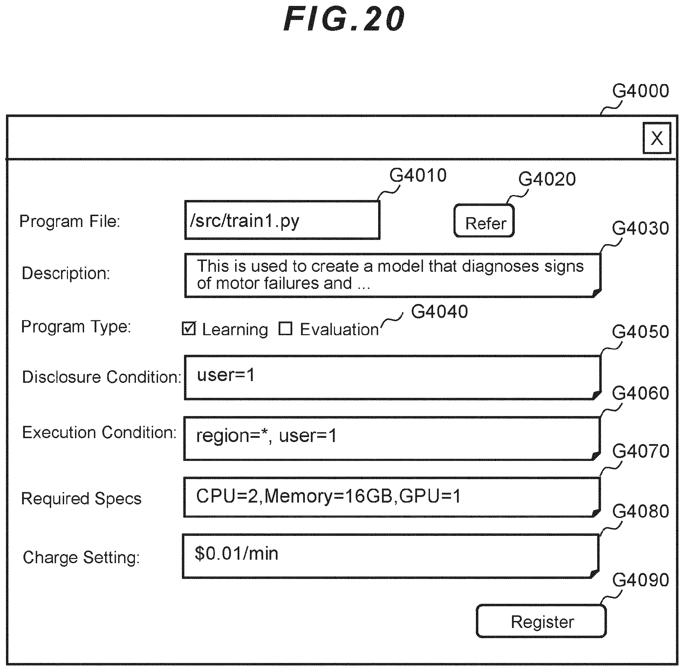

The learning program new registration button G3035 is a button used when a new learning program is registered. In response to this button being pressed, transition to the program registration screen G4000 (FIG. 20) is made. A row may be added to the learning program table G3030 by registration of the learning program.

The evaluation program table G3040 is a table that illustrates a list of the evaluation programs available in the model evaluation. In each row, information of one evaluation program is displayed. The evaluation program information displayed in each row may be the information in which the program type T3115 in the learning/evaluation program management table T3100 is set to "evaluation" (a value indicative of the fact that the program is an evaluation program). Also, indication of the evaluation program information may be controlled in accordance with the value of the disclosure condition T3140. Further, the evaluation program to be used may be selected as a result of the model developer 1020 clicking on the use column by a mouse pointer and checking the checkbox.

The evaluation program new registration button G3035 is a button used when a new evaluation program is registered. In response to this button being pressed, transition to the program registration screen G4000 is made. A row may be added to the evaluation program table G3030 upon registration of the evaluation program.

The dataset table G3050 is a table that provides a list of datasets available in the model learning/evaluation. For each row, information of one dataset is displayed. The dataset information displayed in each row is the information acquired from the dataset management table T4000. Indication of the dataset information may be controlled in accordance with the value of the disclosure condition T3140. Further, the dataset to be used may be selected as a result of the model developer 1020 clicking on the use column using a mouse pointer and checking the checkbox. Also, multiple datasets may be selected.

The dataset new registration button G3055 is a button used to register new dataset for use in the learning and evaluation. In response to this button being pressed, transition to the dataset registration screen G5000 is made. A row may be added to the dataset table G3050 upon registration of the dataset.

The job setting/result table G3060 is a table that indicates the setting and result information of the learning and evaluation job. The learning setting of this table and the evaluation indicator may be directly entered by the user and the user may perform the setting thereof. Also, start and stoppage of execution of the learning/evaluation may be controlled by pressing a start button or stop button in the control column. The content of what has been set on this table is added to each column of the learning/evaluation setting table T3200.

The model registration button G3065 is a button used to register the model created by this screen setting in the model management system so as to make it available on the marketplace system.

FIG. 20 illustrates an example of the program registration screen G4000 presented to the model developer 1020.

The program registration screen G4000 is a screen for registering the new learning program or the evaluation program in the model management system 3000. The screen G4000 includes, for example, a program file entry text box G4010, a program file reference button G4020, a program file overview description entry text box G4030, a program type setting checkbox G4040, a disclosure condition entry text box G4050, an execution condition entry text box G4060, a required specification entry text box G4070, a charge setting entry text box G4080, and a program registration button G4090.

The program file entry text box G4010 is a text box used to enter the path of the file in the model development computer 1030 for the learning/evaluation program file to be displayed on the model details screen G2000 and the model generation/evaluation registration screen G3000. The file path may be manually input or may be designated by a file selection dialog that pops up in response to pressing of the program file reference button G4020. The model management program P3000 extracts the file name from the path designated by this text box and sets it as the program file T3110 of the learning/evaluation program management table T3100.

The program file overview description entry text box G4030 is a text box used to enter the summary of the program to be registered in the form of a text format or Markdown format. The value that has been input is recorded in the description field T3135 of the learning/evaluation program management table T3100.

The program type setting checkbox G4040 is a checkbox for selecting the type of the program to be registered. It is possible to select learning/evaluation. The value that has been checked is recorded in the program type field T3115 of the learning/evaluation program management table T3100.

The disclosure condition entry text box G4050, the execution condition entry text box G4060, the required specification entry text box G4070, and the charge setting entry text box G4080 are text boxes used to enter the disclosure condition, the execution condition, the required specification, and the charge setting, respectively, of the program to be registered. The values that have been input are recorded in the disclosure condition field T3140, the execution condition field T3145, the required specification field T3150, and the charge setting field T3120, respectively, of the learning/evaluation program management table T3100.

The program registration button G4090 is a button for registration of a program in the model management system with the entered value used as the set value. The program file existing on the path designated by the program file entry text box G4010 is transmitted to the model management program P3000 and stored in the model management system 3000. By using the program management information entered on this screen G4000, a registration request to register the program is transmitted to the model management program P3000 and registration of a new program file is executed.

FIG. 21 illustrates an example of the data registration screen G5000 presented to the application developer 1000 or the model developer 1020.

The data registration screen G5000 is a screen for registering the new learning or evaluation dataset in the data management system 4000. The screen G5000 includes, for example, a dataset file entry text box G5010, a dataset file reference button G5020, a dataset overview description entry text box G5030, a disclosure condition entry text box G5040, a use condition entry text box G5050, a charge setting entry text box G5060, and a program registration button G5070.

The dataset file entry text box G5010 is a text box used to enter the path of the file in the application development computer 1010 or the model development computer 1030 for the dataset file to be displayed on the model details screen G2000 and the model generation/evaluation registration screen G3000. The file path may be manually input or may be designated by the file selection dialog that pops up in response to pressing of the dataset file reference button G5020. The data management program P4000 extracts the file name from the path designated by this text box and sets it as the dataset file T4020 of the dataset management table T4000.

The dataset overview description entry text box G5030 is a text box used to enter the summary of the dataset to be registered in the form of a text format or Markdown format. The value that has been input is recorded in the description field T4030 of the dataset management table T4000.

The disclosure condition entry text box G5040, the execution condition entry text box G5050, the charge setting entry text box G5060 are text boxes used to enter the disclosure condition, the use condition, the required specification, and the charge setting, respectively, of the dataset to be registered. The values that have been input are recorded in the disclosure condition field T4070, the use condition field T4080, and the charge setting field T4040, respectively, of the learning/evaluation program management table T4000.

The program registration button G5070 is a button for registration of a dataset in the data management system with the entered value used as the set value. The dataset file existing on the path designated by the dataset file entry text box G5010 is transmitted to the data management program P4000 and may be stored in the data management system 4000. By using the dataset management information entered on this screen G5000, the registration request to register the dataset is transmitted to the data management program P4000 and registration of a new dataset file is executed.

### (Second Feature combination)

Description of the second feature combination will be provided below, which focuses on the differences from the first feature combination and description of the common features which are also found in the first feature combination is not repeated or only provided in a simplified manner.

In the second feature combination, when the model developer 1020 develops a model, in addition to the learning program and the evaluation program developed by the model developer 1020 as well as the dataset prepared by the model developer 1020, a dataset registered by the application developer 1000 who used the model is used, and, when the model is to be created, learning/evaluation can be executed even when collision occurs between the execution conditions of the program and the dataset registered by the model developer 1020 and the execution condition of the dataset registered by the application developer 1000.

The basic idea of the solution to the problem caused by the collision between execution conditions can be summarized as follows. The model developer 1020 registers an additional learning program that satisfies an execution condition. Thus, at the outset, the model is created using the learning/evaluation program and the dataset prepared by the model developer 1020. After that, on the basis of this model, additional training is performed on the model using the additional learning program and a dataset registered by the application developer 1000, and a model that also includes the data provided by the application developer 1000 is created. Note that, in relation to the developed model, the technique for training the model using the additional data will be referred to as "transition learning" in this specification.

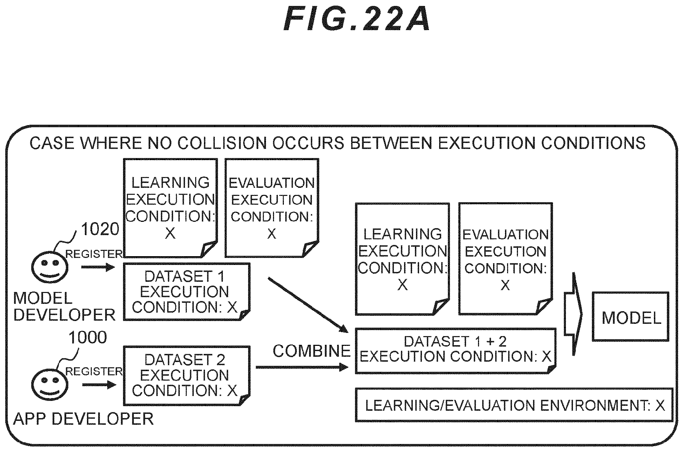

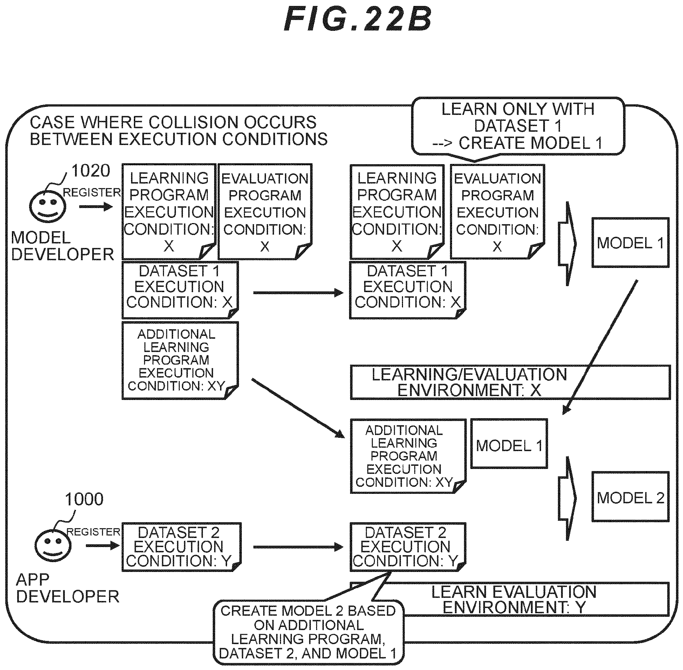

FIG. 22A illustrates an example of the concept of the processing in a case where no collision occurs between execution conditions. FIG. 22B illustrates an example of the concept of the processing in a case where collision has occurred between execution conditions.

The term "collision between execution conditions" refers to a state where, if either of the execution condition specified by the model developer 1020 and the execution condition specified by the application developer 1000 is satisfied, then at least part of the other of these two execution conditions cannot be satisfied.

As illustrated in FIG. 22A, in a case where no collision occurs between the execution conditions, the dataset registered by the model developer 1020 and the dataset registered by the application developer 1000 are combined in an environment that satisfies the execution conditions, and a model is created using the program registered by the model developer 1020. Specifically, for example, the execution condition X of the dataset 2 from the application developer complies with the execution conditions X of all of the learning program, the evaluation program, and the dataset 1 provided by the model developer. As a result, the model is improved based on the learning program, the evaluation program, and the datasets 1 and 2.

On the other hand, in some cases, collision may occur between the execution conditions as illustrated in FIG. 22B. Specifically, for example, the execution condition Y of the dataset 2 from the application developer does not comply with any of the execution conditions X of the learning program, the evaluation program, and the dataset 1 provided by the model developer. In this case, Model 1 is created in an environment that satisfies these execution conditions X using the dataset registered by the model developer 1020, the learning program, and the evaluation program. After creation of the Model 1, additional learning is performed on the Model 1 by using the additional learning program, the dataset registered by the application developer 1000, and the Model 1 and, as a result, the Model 2 that is based on the Model 1 is created. In other words, the execution conditions of the additional learning program include Y as well as X, and satisfy the execution condition Y of the dataset 2, so that additional learning is performed using the additional learning program and with the input to the Model 1 used as the dataset 2. By virtue of this, while the program registered by the model developer 1020, the execution condition of the dataset, the execution condition of the dataset registered by the application developer 1000 are allowed to be satisfied, it is made possible to create the Model 2 that is based upon both of these datasets.

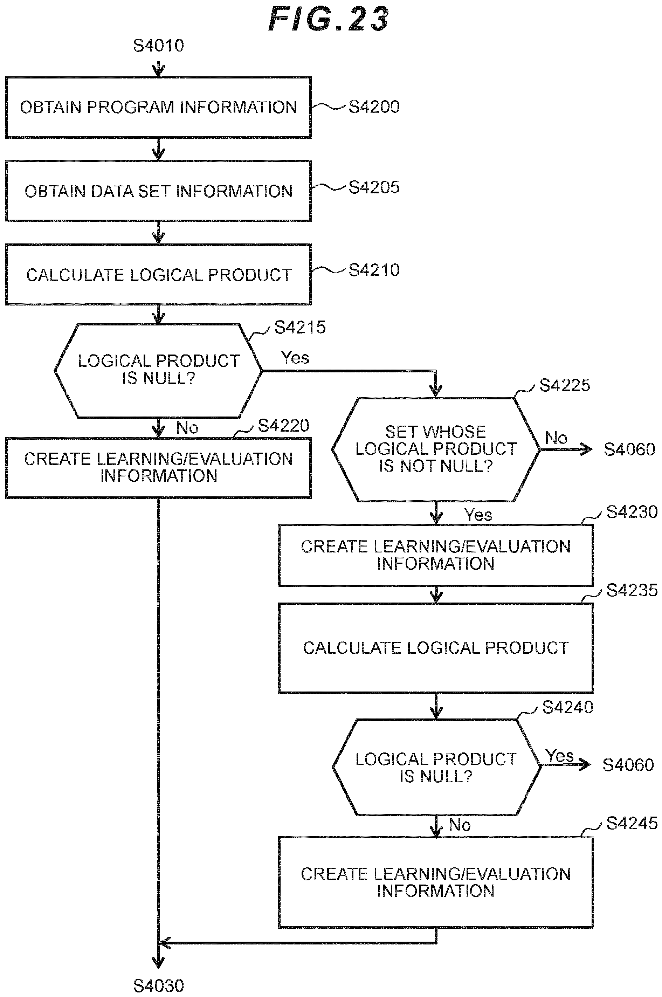

FIG. 23 is a flowchart illustrating details of the step S4020 in the second feature combination.

At the step S4200, the learning/evaluation control program P5000 acquires the learning/evaluation program information from the learning/evaluation program table T3100 by using as the key the program identifier included in the information in the request received at the step S4010. After that, the process proceeds to the step S4205.

At the step S4205, the learning/evaluation control program P5000 acquires the dataset information from the dataset management table T4000 by using as the key the dataset identifier included in the information in the request received at the step S4010. After that, the process proceeds to the step S4210. Note that, in the case where multiple dataset identifiers are included in the information in the request, multiple pieces of dataset information are acquired from the dataset management table T4000 using each other dataset identifiers as the key.

At the step S4210, the learning/evaluation control program P5000 acquires the execution conditions from the learning/evaluation program information acquired at the step S4200 and the dataset information acquired at the step S4205, and computes a logical product of all of these execution conditions.

At the step S4215, the learning/evaluation control program P5000 refers to the result of the logical product computed at the step S4200. If the logical product is null, then the process proceeds to the step S4225. If the logical product is not null, then the process proceeds to the step S4220.

At the step S4220, the learning/evaluation control program P5000 creates the learning/evaluation setting information including the information on and the execution conditions of the program and the dataset since an environment exists which satisfies the execution conditions of all of the programs and datasets, and registers it in the learning/evaluation setting table T3200.

At the step S4225, since a state is entered where there is no environment which would satisfy the execution conditions of all of the programs and datasets, the learning/evaluation control program P5000 computes a logical product of the program and the individual datasets. If there is any set whose logical product is not null, then the process proceeds to the step S4230. If there is no set whose logical product is not null, then it follows that there is no environment that would satisfy the execution condition, so that the process proceeds to the step S4060 to terminate the learning/evaluation.

At the step S4230, the learning/evaluation control program P5000 creates learning/evaluation setting information for a set of a program and dataset whose execution conditions are not null, and stores it in the learning/evaluation information setting table T3200. After that, the process proceeds to the step S4235.

At the step S4235, the learning/evaluation control program P5000 stores information of the program for a set of a program and a dataset whose logical product is null. It refers to the learning/evaluation program information to check presence or absence of an additional learning program. If the additional learning program exists, then the learning/evaluation control program P5000 acquires program information of the additional learning program from the learning/evaluation program management table T3100, and computes a logical product of the execution condition of the additional learning program and the execution condition of the dataset. After that, the process proceeds to the step S4240. Note that, if the additional learning program does not exist, the logical product is null and the process proceeds to the step S4240.

At the step S4240, if the logical product at the step S4235 is null, then no learning/evaluation environment exists which would satisfy the condition and the learning/evaluation is terminated, so that the process proceeds to the step S4040. If the logical product at the step S4235 is not null, then the learning/evaluation control program P5000 creates learning/evaluation information including the additional learning program and the dataset, and registers it in the learning/evaluation setting table T3200. After that, the process proceeds to the step S4030.

Note that, in the additional learning program, since learning is performed using the model created at the step S4230, the learning depends on the learning/evaluation setting created at the step S4230. In view of this, the learning/evaluation control program P5000 records a setting identifier indicative of the learning/evaluation setting information created at the step S4230 in the dependency setting information of this learning setting information.

At the step S4030, the learning/evaluation control program P5000 creates the learning/evaluation job information on the basis of the learning/evaluation setting information created at this learning/evaluation setting information generation section and registers it in the learning/evaluation job table T3300.

According to the second feature combination, a model is created with the program and the dataset satisfying the execution condition, and subsequently learning is performed using this model, the additional learning program, and the dataset that did not satisfy the execution condition, and thereby it is made possible to create the model using all pieces of data.

Note that in place of or in addition to the additional learning program, an additional evaluation program may also be provided. At least either of the additional learning program and the additional evaluation program is referred to as "additional learning/evaluation program," and at least either of the learning program and the evaluation program is referred to as "learning/evaluation program." The additional learning/evaluation program is a learning/evaluation program having an execution condition different than the execution condition of the original learning/evaluation program (learning/evaluation program with which the additional learning/evaluation program is associated). In other words, the execution condition of the additional learning/evaluation program includes a condition that differs from at least part of the execution condition of the original learning/evaluation program.

Explanations and illustrations of the above-described feature combinations may be summarized as follows.

The model improvement support system 10 includes the model management system 3000 (an example of the model management unit), the data management system 4000 (an example of the data management unit), the learning/evaluation system 5000 (an example of the learning/evaluation unit).

The model management system 3000 manages the model developed by the model developer 1020 and the learning/evaluation management table T3100 (an example of the learning/evaluation management information) including information indicative of the learning/evaluation program (F3000, F3100) for performing learning/evaluation of the model, and the execution condition of this learning/evaluation program. The management information including the learning/evaluation management information may include information as an example of at least part of the model management table T3000, the evaluation result table T3400, the learning evaluation setting table T3200, and the learning/evaluation job table T3300.

The data management system 4000 manages one or more datasets provided from the application developer 1000 (a person who develops an application using a model) and input to the model in utilization of the model; and the dataset management table T4000 (an example of the dataset management information) information indicative of the execution condition associated with this dataset for each of the one or more datasets.

For each of one or more datasets selected by the model developer 1020 among the one or more datasets, if the execution condition of the learning/evaluation program satisfies the execution condition associated with the dataset, then the learning/evaluation system 5000 executes learning/evaluation program with this dataset used as the input to the model.

By virtue of this, it is made possible for the model developer 1020 to perform model improvement using the dataset while access by the model developer 1020 to the dataset provided by the application developer 1000 is restricted.

The learning/evaluation system 5000 manages, for each of the multiple computers 5200, the computation management table T5000 (an example of the computer management information) including information indicative of the geographical position of each computer 5200. The learning/evaluation program is configured to be executed by one of the multiple computers 5200. If, for each of the above-described one or more datasets selected by the model developer 1020, the execution condition associated with the dataset includes a position condition which is the condition of the geographical position and this execution condition satisfies the execution condition of the learning/evaluation program, then the learning/evaluation system 5000 identifies from the computer management table T5000 the computer 5200 that belongs to the geographical position indicated by this position condition. The learning/evaluation system 5000 causes the identified computer 5200 to execute the learning/evaluation program with this dataset used as the input to the model. By virtue of this, it is made possible to avoid the dataset provided by the application developer 1000 from being transmitted to and executed by the computer 5200 that does not satisfy the position condition specified by the application developer 1000.

The execution condition of the learning/evaluation program includes the required specification which is the condition of the computation resources for execution of the learning/evaluation program. The computer management table T5000 includes, for each of the multiple computers, information indicative of the computation resources of these computers. The above-described identified computer 5200 is a computer 5200 that belongs to the geographical position indicated by the above-described position condition and has available resources equal to or larger than that of the required specification. As a result, it is made possible to ensure that the capability to execute the learning/evaluation program corresponds to the expected performance.

If collision occurs between every execution condition of the one or more datasets and the execution condition of the learning/evaluation program, then the learning/evaluation system 5000 executes the additional learning/evaluation program associated with the execution condition including the condition that satisfies the execution condition of at least one dataset provided from the application developer 1000 by using, as the input, the dataset associated with the execution condition that satisfies the execution condition of the learning/evaluation program and provided by the model developer 1020 with regard to the model (for example, Model 1) on which learning/evaluation program was executed, and thereby creates a new model (for example, Model 2) based on this model. By virtue of this, a model is created with the learning/evaluation program and the dataset that satisfy the execution conditions and, subsequently, learning/evaluation is performed on the model by using the additional learning/evaluation program as well as the dataset that did not satisfy the execution condition, and thereby it is made possible to create the model.

The learning/evaluation system 5000 causes the learning/evaluation program to execute the learning/evaluation of the model by using the parameter specified by at least either of the application developer 1000 and the model developer 1020. The parameter is at least either of a parameter regarding learning of the model (for example, "epoch" indicative of the number of epochs) and a parameter regarding the evaluation of the model and including evaluation indicator of this model (for example, "accuracy"). By virtue of this, it is made possible to perform learning/evaluation in the desired viewpoint of at least either of the application developer 1000 and the model developer 1020.

A marketplace system 2000 can be provided. In a case where, for each of the one or more datasets, in addition to the execution condition, a disclosure condition which is the disclosure-eligible condition of the dataset is associated with this dataset, if the model developer 1020 complies with this disclosure condition, then the marketplace system 2000 (an example of the interface unit) discloses this dataset to the model developer 1020 in such a manner that this dataset is selectable. By virtue of this, the destination of disclosure of the fed-back dataset can be restricted to the desired range of the application developers 1000. Also, in a case where the dataset provided from the application developer 1000 is associated with the charge information indicative of the amount of payment in accordance with the usage, then the marketplace system 2000 performs charging based on the charge information in accordance with the execution of this learning/evaluation program with this dataset used as the input to this model. The destination of charging may be the model developer 1020 who used the dataset or may be any other person or organization. By virtue of this, it is made possible to technically give incentive to the application developer 1000 to provide feedback of the dataset, as a result of which provision of effective feedback for model improvement to the model developer 1020 can be facilitated.

Features described in this specification and the claims or shown in a figure shall be deemed combinable with and amongst each other also if their combination is not expressly described, to the extent that the combination is technically feasible. Features described in a certain context, feature combination, figure or claim shall be deemed separable from this claim, context, feature combination or figure and shall be deemed combinable with every other figure, claim, context or feature combination, to the extent that it is technically feasible. Feature combinations and figures shall not be understood as being meant necessarily exclusive against each other. Descriptions of a method or procedure or a method step or a procedural step shall be understood also as description of means and/or possibly program instructions of executable code on a data carrier adapted for implementing the method or procedure or method step or procedural step, and vice versa.

## Claims

1. A model improvement support system comprising:
a model management unit (3000) configured to manage
a model (F3200) developed by a model developer and adapted for being used by an application software to be developed by an application developer, the model (F3200) receiving one or more input datasets (F4000) when being utilized,
a learning/evaluation program (F3000, F3100) for performing learning/evaluation on the model (F3200), wherein the learning/evaluation is at least either of learning and evaluation of the model (F3200), the learning/evaluation program is configured to be executed by one of multiple computers (5000), and
learning/evaluation management information (T3000) including information indicative of a first execution condition (T3070) of the learning/evaluation program;
a data management unit (4000) configured to manage
one or more of said datasets (F4000) provided by said application developer developing said application software using the model (F3200), wherein the one or more datasets are input to the model (F3200) in utilization of the model (F3200) and
dataset management information (T4000) including information indicative of a second execution condition (T4080) associated with the dataset (F4000) for each of the one or more datasets (F4000); and
a learning/evaluation unit (5000) configured to execute the learning/evaluation program (F3000, F3100), for each of one or more datasets (F4000) selected by the model developer from the one or more datasets (F4000) provided by the application developer, in response to the first execution condition (T3070) of the learning/evaluation program satisfying said second execution condition (T4080) associated with the respective dataset (F4000), with the respective dataset used as an input to the model,
wherein
the learning/evaluation unit (5000) is configured to manage, for each of the multiple computers (5200), computer management information (T5000) including information (T5030, T5040) indicative of a geographical position of each of the computers (5000), and
for each of the one or more datasets (F4000), the second execution condition (T4080) associated with each dataset (F4000) includes a position condition, which is a condition of a geographical condition, and in response to the said second execution condition (T4080) satisfying the first execution condition (T3070) of the learning/evaluation program, the learning/evaluation unit (5000) is configured to identify a computer belonging to a geographical position indicated by the position condition information (T5030, T5040) from the computer management information (T5000), and causes the identified computer to execute the learning/evaluation program (F3000, F3100) with the dataset used as an input to the model.

2. The model improvement support system as set forth in claim 1, wherein
the execution condition of the learning/evaluation program includes a required specification which is a condition of computation resources for execution of the learning/evaluation program,
the computer management information includes information indicative of computation resources of each computer of the multiple computers, and
the identified computer is a computer that belongs to a geographical position indicated by the position condition and has available resources equal to or larger than that in accordance with the required specification.

3. The model improvement support system as set forth in claim 1, wherein, when collision occurs between all of the second execution conditions of the one or more datasets and the first execution condition of the learning/evaluation program, then the learning/evaluation unit is configured to create a new model based on the model through executing an additional learning/evaluation program associated with an execution condition that includes a condition satisfying an execution condition of at least one dataset provided from the application developer, the additional learning/evaluation program being executed on the model on which the learning/evaluation program has been executed, and the additional learning/evaluation program being executed using, as an input, the dataset provided from the model developer and associated with an execution condition that satisfies the execution condition of the learning/evaluation program.

4. The model improvement support system as set forth in claim 1, wherein
the learning/evaluation unit is configured to cause the learning/evaluation program to execute the learning/evaluation of the model using a parameter specified by at least either of the application developer and the model developer, and
the parameter is at least either of a parameter regarding the learning of the model and a parameter including an evaluation indicator of the model regarding the evaluation of the model.

5. The model improvement support system as set forth in claim 1, further comprising an interface unit configured to selectably disclose the dataset to the model developer if the model developer complies with a disclosure condition in response to, for each of the one or more datasets, the dataset is associated not only with an execution condition but also with the disclosure condition which is a disclosure-eligible condition of the dataset.

6. The model improvement support system as set forth in claim 1, further comprising an interface unit configured to, in response to the dataset being associated with charge information indicative of an amount of payment according to utilization, perform charging of the amount of payment based on the charge information in response to execution of the learning/evaluation program with the dataset used as an input to the model.

7. The model improvement support system as set forth in claim 1, further comprising:
a marketplace system which is an interface unit for the application developer and the model developer;
a model management system connected to the marketplace system, the model management system being the model management unit;
a data management system which is connected to at least either of the marketplace system and the model management system, the data management system being the data management unit; and
a learning/evaluation system which is connected to at least any one of the marketplace system, the model management system, and the data management system, the learning/evaluation system being the learning/evaluation unit.

8. A model improvement support method comprising:
for each of one or more datasets selected by a model developer who develops a model from one or more datasets provided from an application developer who develops application software utilizing the model, the one or more datasets being input to a model in utilization of the model, making a determination of whether or not a first execution condition of a learning/evaluation program for performing learning/evaluation which is at least either of learning or evaluation of the model satisfies a second execution condition associated with the dataset; and
executing the learning/evaluation program with the dataset used as an input to the model when a result of determination is affirmative,
wherein
for each of multiple computers, computer management information including information indicative of a geographical position of each of the computers is managed,
the learning/evaluation program is executed by one of the multiple computers, and
for each of the one or more datasets, in response to the second execution condition associated with each dataset including a position condition which is a condition of a geographical condition and in response to the execution condition satisfying the execution condition of the learning/evaluation program, a computer belonging to a geographical position indicated by the position condition from the computer management information is identified, and the identified computer executes the learning/evaluation program with the dataset used as an input to the model.

## Patentansprüche

1. Modellverbesserungs-Unterstützungssystem, umfassend:
eine Modellverwaltungseinheit (3000), die ausgestaltet ist, um
ein Modell (F3200), das durch einen Modellentwickler entwickelt wurde und geeignet ist, um durch eine Anwendungssoftware verwendet zu werden, die durch einen Anwendungsentwickler entwickelt werden soll, wobei das Modell (F3200) einen oder mehrere Eingangsdatensätze (F4000) empfängt, wenn es verwendet wird,
ein Lern-/Beurteilungsprogramm (F3000, F3100) zur Durchführung eines Lernens/einer Beurteilung an dem Modell (F3200), wobei das Lernen/die Beurteilung ein Lernen und/oder eine Beurteilung des Modells (F3200) umfasst, wobei das Lern-/Beurteilungsprogramm ausgestaltet ist, um durch einen von mehreren Computern (5000) ausgeführt zu werden, und
eine Lern-/Beurteilungsverwaltungsinformation (T3000), die eine Information umfasst, die eine erste Ausführungsbedingung (T3070) des Lern-/ Beurteilungsprogramms angibt, zu verwalten,
eine Datenverwaltungseinheit (4000), die ausgestaltet ist, um
einen oder mehrere der Datensätze (F4000), die durch den Anwendungsentwickler bereitgestellt werden, der die Anwendungssoftware unter Verwendung des Modells (F3200) entwickelt, wobei der eine oder die mehreren Datensätze bei der Verwendung des Modells (F3200) in das Modell (F3200) eingegeben werden, und
für jeden des einen oder der mehreren Datensätze (F4000) eine Datensatzverwaltungsinformation (T4000), die eine Information umfasst, die eine zweite Ausführungsbedingung (T4080) angibt, die dem Datensatz (F4000) zugehörig ist, zu verwalten, und
eine Lern-/Beurteilungseinheit (5000), die ausgestaltet ist, um in Ansprechen darauf, dass die erste Ausführungsbedingung (T3070) des Lern-/Beurteilungsprogramms die zweite Ausführungsbedingung (T4080) erfüllt, die dem jeweiligen Datensatz (F4000) zugehörig ist, wobei der jeweilige Datensatz als Eingang in das Modell verwendet wird, das Lern-/Beurteilungsprogramm (F3000, F3100) für jeden des einen oder der mehreren Datensätze (F4000), die durch den Modellentwickler aus dem einen oder den mehreren Datensätzen (F4000) ausgewählt werden, die durch den Anwendungsentwickler bereitgestellt werden, auszuführen,
wobei
die Lern-/Beurteilungseinheit (5000) ausgestaltet ist, um für jeden der mehreren Computer (5200) eine Computerverwaltungsinformation (T5000) zu verwalten, die eine Information (T5030, T5040) umfasst, die eine geographische Position jedes der Computer (5000) angibt, und
für jeden des einen oder der mehreren Datensätze (F4000) die zweite Ausführungsbedingung (T4080), die jedem Datensatz (F4000) zugehörig ist, eine Positionsbedingung umfasst, die eine Bedingung einer geographischen Bedingung ist, und die Lern-/Beurteilungseinheit (5000) ausgestaltet ist, um in Ansprechen darauf, dass die zweite Ausführungsbedingung (T4080) die erste Ausführungsbedingung (T3070) des Lern-/Beurteilungsprogramms erfüllt, einen Computer, der zu einer geographischen Position gehört, die durch die Positionsbedingungsinformation (T5030, T5040) angegeben ist, aus der Computerverwaltungsinformation (T5000) zu identifizieren, und veranlasst, dass der identifizierte Computer das Lern-/Beurteilungsprogramm (F3000, F3100) mit dem Datensatz, der als Eingang in das Modell verwendet wird, ausführt.

2. Modellverbesserungs-Unterstützungssystem nach Anspruch 1, wobei die Ausführungsbedingung des Lern-/Beurteilungsprogramms eine erforderliche Spezifikation umfasst, die eine Bedingung von Rechenressourcen zur Ausführung des Lern-/Beurteilungsprogramms ist,
die Computerverwaltungsinformation eine Information umfasst, die Rechenressourcen jedes Computers der mehreren Computer angibt, und
der identifizierte Computer ein Computer ist, der zu einer geographischen Position gehört, die durch die Positionsbedingung angegeben ist, und verfügbare Ressourcen aufweist, die gleich jenen oder größer als jene gemäß der erforderlichen Spezifikation sind.

3. Modellverbesserungs-Unterstützungssystem nach Anspruch 1, wobei die Lern-/Beurteilungseinheit ausgestaltet ist, um, wenn eine Kollision zwischen allen zweiten Ausführungsbedingungen des einen oder der mehreren Datensätze und der ersten Ausführungsbedingung des Lern-/Beurteilungsprogramms auftritt, ein neues Modell basierend auf dem Modell durch Ausführen eines zusätzlichen Lern-/Beurteilungsprogramms, das einer Ausführungsbedingung zugehörig ist, die eine Bedingung umfasst, die eine Ausführungsbedingung mindestens eines von dem Anwendungsentwickler bereitgestellten Datensatzes erfüllt, zu erzeugen, wobei das zusätzliche Lern-/ Beurteilungsprogramm an dem Modell ausgeführt wird, an dem das Lern-/ Beurteilungsprogramm ausgeführt wurde, und das zusätzliche Lern-/Beurteilungsprogramm unter Verwendung, als Eingang, des Datensatzes, der von dem Modellentwickler bereitgestellt wird und einer Ausführungsbedingung zugehörig ist, die die Ausführungsbedingung des Lern-/Beurteilungsprogramms erfüllt, ausgeführt wird .

4. Modellverbesserungs-Unterstützungssystem nach Anspruch 1, wobei
die Lern-/Beurteilungseinheit ausgestaltet ist um zu bewirken, dass das Lern-/Beurteilungsprogramm das Lernen/die Beurteilung des Modells unter Verwendung eines Parameters ausführt, der durch den Anwendungsentwickler und/oder den Modellentwickler spezifiziert ist, und
der Parameter ein Parameter bezüglich des Lernens des Modells und/oder ein Parameter, der einen Beurteilungsindikator des Modells bezüglich der Beurteilung des Modells umfasst, ist.

5. Modellverbesserungs-Unterstützungssystem nach Anspruch 1, ferner umfassend eine Schnittstelleneinheit, die ausgestaltet ist, um den Datensatz dem Modellentwickler auswählbar aufzuzeigen, wenn der Modellentwickler in Ansprechen darauf einer Aufzeigebedingung genügt, dass für jeden des einen oder der mehreren Datensätze der Datensatz nicht nur einer Ausführungsbedingung, sondern auch der Aufzeigebedingung, die eine Aufzeigeberechtigungsbedingung des Datensatzes ist, zugehörig ist.

6. Modellverbesserungs-Unterstützungssystem nach Anspruch 1, ferner umfassend eine Schnittstelleneinheit, die ausgestaltet ist, um in Ansprechen darauf, dass der Datensatz einer Gebühreninformation zugehörig ist, die einen Zahlungsbetrag gemäß einer Nutzung angibt, eine Abrechnung des Zahlungsbetrags basierend auf der Gebühreninformation in Ansprechen auf die Ausführung des Lern-/Beurteilungsprogramms mit dem Datensatz, der als Eingang in das Modell verwendet wird, durchzuführen.

7. Modellverbesserungs-Unterstützungssystem nach Anspruch 1, ferner umfassend:
ein Marktplatzsystem, das eine Schnittstelleneinheit für den Anwendungsentwickler und den Modellentwickler ist;
ein Modellverwaltungssystem, das mit dem Marktplatzsystem verbunden ist, wobei das Modellverwaltungssystem die Modellverwaltungseinheit ist;
ein Datenverwaltungssystem, das mit dem Marktplatzsystem und/oder dem Modellverwaltungssystem verbunden ist, wobei das Datenverwaltungssystem die Datenverwaltungseinheit ist; und
ein Lern-/Beurteilungssystem, das mit dem Marktplatzsystem und/oder dem Modellverwaltungssystem und/oder dem Datenverwaltungssystem verbunden ist, wobei das Lern-/Beurteilungssystem die Lern-/Beurteilungseinheit ist.

8. Modellverbesserungs-Unterstützungsverfahren, das umfasst, dass:
für jeden von einem oder mehreren Datensätzen, die durch einen Modellentwickler ausgewählt werden, der ein Modell aus einem oder mehreren Datensätzen entwickelt, die von einem Anwendungsentwickler bereitgestellt werden, der eine Anwendungssoftware unter Verwendung des Modells entwickelt, wobei der eine oder die mehreren Datensätze bei der Verwendung des Modells in ein Modell eingegeben werden, eine Ermittlung durchgeführt wird, ob eine erste Ausführungsbedingung eines Lern-/Beurteilungsprogramms zur Durchführung eines Lernens/einer Beurteilung, was ein Lernen und/oder eine Beurteilung des Modells umfasst, eine zweite Ausführungsbedingung, die dem Datensatz zugehörig ist, erfüllt oder nicht; und
das Lern-/Beurteilungsprogramm mit dem Datensatz ausgeführt wird, der als Eingang in das Modell verwendet wird, wenn ein Ergebnis der Ermittlung positiv ist,
wobei
für jeden von mehreren Computern eine Computerverwaltungsinformation verwaltet wird, die eine Information umfasst, die eine geographische Position jedes der Computer angibt,
das Lern-/Beurteilungsprogramm durch einen der mehreren Computer ausgeführt wird, und
für jeden des einen oder der mehreren Datensätze in Ansprechen darauf,
dass die zweite Ausführungsbedingung, die jedem Datensatz zugehörig ist,
eine Positionsbedingung umfasst, die eine Bedingung einer geographischen Bedingung ist, und in Ansprechen darauf, dass die Ausführungsbedingung die Ausführungsbedingung des Lern-/Beurteilungsprogramms erfüllt, ein Computer, der zu einer geographischen Position gehört, die durch die Positionsbedingung angegeben ist, aus der Computerverwaltungsinformation identifiziert wird, und der identifizierte Computer das Lern-/Beurteilungsprogramm mit dem Datensatz, der als Eingang in das Modell verwendet wird, ausführt.

## Revendications

1. Système de support d'amélioration de modèle comprenant :
une unité de gestion de modèle (3000) configurée pour gérer
un modèle (F3200) développé par un développeur de modèle et adapté pour être utilisé par un logiciel d'application devant être développé par un développeur d'application, le modèle (F3200) recevant un ou plusieurs jeux de données d'entrée (F4000) quand il est utilisé,
un programme d'apprentissage/évaluation (F3000, F3100) pour effectuer un apprentissage/évaluation sur le modèle (F3200), l'apprentissage/évaluation étant au moins l'un ou l'autre d'un apprentissage et d'une évaluation du modèle (F3200), le programme d'apprentissage/évaluation étant configuré pour être exécuté par l'un de multiples ordinateurs (5000), et
des informations de gestion d'apprentissage/évaluation (T3000) incluant des informations indiquant une première condition d'exécution (T3070) du programme d'apprentissage/évaluation ;
une unité de gestion de données (4000) configurée pour gérer
un ou plusieurs desdits jeux de données (F4000) fournis par ledit développeur d'application développant ledit logiciel d'application en utilisant le modèle (F3200), lesdits un ou plusieurs jeux de données étant entrés vers le modèle (F3200) en utilisant le modèle (F3200) et
des informations de gestion de jeux de données (T4000) incluant des informations indiquant une seconde condition d'exécution (T4080) associée au jeu de données (F4000) pour chacun desdits un ou plusieurs jeux de données (F4000) ; et
une unité d'apprentissage/évaluation (5000) configurée pour exécuter le programme d'apprentissage/évaluation (F3000, F3100), pour chacun de un ou plusieurs jeux de données (F4000) sélectionnés par le développeur de modèle à partir desdits un ou plusieurs jeux de données (F4000) fournis par le développeur d'application, en réponse au fait que la première condition d'exécution (T3070) du programme d'apprentissage/évaluation satisfait à ladite seconde condition d'exécution (T4080) associée au jeu de données respectif (F4000), le jeu de données respectif étant utilisé à titre d'entrée vers le modèle,
dans lequel
l'unité d'apprentissage/évaluation (5000) est configurée pour gérer, pour chacun des multiples ordinateurs (5200), des informations de gestion d'ordinateur (T5000) incluant des informations (T5030, T5040) indiquant une position géographique de chacun des ordinateurs (5000), et
pour chacun desdits un ou plusieurs jeux de données (F4000), la seconde condition d'exécution (T4080) associée à chaque jeu de données (F4000) inclut une condition de position, qui est une condition d'une condition géographique, et en réponse au fait que ladite seconde condition d'exécution (T4080) satisfait à la première condition d'exécution (T3070) du programme d'apprentissage/évaluation, l'unité d'apprentissage/évaluation (5000) est configurée pour identifier un ordinateur appartenant à une position géographique indiquée par les informations de condition de position (T5030, T5040) provenant des informations de gestion d'ordinateur (T5000), et amène l'ordinateur identifié à exécuter le programme d'apprentissage/évaluation (F3000, F3100), le jeu de données étant utilisé à titre d'entrée vers le modèle.

2. Système de support d'amélioration de modèle selon la revendication 1, dans lequel
la condition d'exécution du programme d'apprentissage/évaluation inclut une spécification requise qui est une condition de ressources de calcul pour une exécution du programme d'apprentissage/évaluation,
les informations de gestion d'ordinateur incluent des informations indiquant des ressources de calcul de chaque ordinateur des multiples ordinateurs, et
l'ordinateur identifié est un ordinateur qui appartient à une position géographique indiquée par la condition de position et qui a des ressources disponibles égales ou supérieures à celles en accord avec la spécification requise.

3. Système de support d'amélioration de modèle selon la revendication 1, dans lequel, quand une collision se produit entre la totalité des secondes conditions d'exécution desdits un ou plusieurs jeux de données et la première condition d'exécution du programme d'apprentissage/évaluation, alors l'unité d'apprentissage/évaluation est configurée pour créer un nouveau modèle sur la base du modèle au moyen d'une exécution d'un programme d'apprentissage/évaluation additionnel associé à une condition d'exécution qui inclut une condition satisfaisant à une condition d'exécution d'au moins un jeu de données fourni par le développeur d'application, le programme d'apprentissage/évaluation additionnel étant exécuté sur le modèle sur lequel le programme d'apprentissage/évaluation a été exécuté, et le programme d'apprentissage/évaluation additionnel étant exécuté en utilisant, à titre d'entrée, le jeu de données fourni par le développeur de modèle et associé à une condition d'exécution qui satisfait à la condition d'exécution du programme d'apprentissage/évaluation.

4. Système de support d'amélioration de modèle selon la revendication 1, dans lequel
l'unité d'apprentissage/évaluation est configurée pour amener le programme d'apprentissage/évaluation à exécuter l'apprentissage/évaluation du modèle en utilisant un paramètre spécifié par au moins l'un ou l'autre du développeur d'application et du développeur de modèle, et
le paramètre est au moins l'un ou l'autre d'un paramètre concernant l'apprentissage du modèle et d'un paramètre incluant un indicateur d'évaluation du modèle concernant l'évaluation du modèle.

5. Système de support d'amélioration de modèle selon la revendication 1, comprenant en outre une unité d'interface configurée pour divulguer sélectivement le jeu de données au développeur de modèle si le développeur de modèle est en conformité avec à une condition de divulgation en réponse au fait que, pour chacun desdits un ou plusieurs jeux de données, le jeu de données est associé non seulement à une condition d'exécution mais également à la condition de divulgation qui est une condition éligible à la divulgation du jeu de données.

6. Système de support d'amélioration de modèle selon la revendication 1, comprenant en outre une unité d'interface configurée pour, en réponse au fait que le jeu de données est associé à des informations de charge indiquant une quantité de paiement en accord avec une utilisation, effectuer une charge de la quantité de paiement sur la base des informations de charge en réponse à une exécution du programme d'apprentissage/évaluation avec le jeu de données utilisé à titre d'entrée vers le modèle.

7. Système de support d'amélioration de modèle selon la revendication 1, comprenant en outre :
un système de marché qui est une unité d'interface pour le développeur d'application et le développeur de modèle ;
un système de gestion de modèle connecté au système de marché, le système de gestion de modèle étant l'unité de gestion de modèle ;
un système de gestion de données qui est connecté au moins à l'un ou l'autre du système de marché et du système de gestion de modèle, le système de gestion de données étant l'unité de gestion de données ; et
un système d'apprentissage/évaluation qui est connecté à au moins l'un quelconque du système de marché, du système de gestion de modèle, et du système de gestion de données, le système d'apprentissage/évaluation étant l'unité d'apprentissage/évaluation.

8. Procédé de support d'amélioration de modèle comprenant les étapes consistant à :
pour chacun d'un ou de plusieurs jeux de données sélectionnés par un développeur de modèle qui développe un modèle à partir d'un ou de plusieurs jeux de données fournis par un développeur d'application qui développe un logiciel d'application en utilisant le modèle, lesdits un ou plusieurs jeux de données étant entrés vers un modèle en utilisant le modèle,
faire une détermination selon laquelle une première condition d'exécution d'un programme d'apprentissage/évaluation pour effectuer un apprentissage/évaluation qui est au moins l'un ou l'autre d'un apprentissage ou d'une évaluation du modèle satisfait ou non à une seconde condition d'exécution associée au jeu de données ; et
exécuter le programme d'apprentissage/évaluation avec le jeu de données utilisé à titre d'entrée vers le modèle quand un résultat de détermination est affirmatif,
dans lequel
pour chacun de multiples ordinateurs, des informations de gestion d'ordinateur incluant des informations indiquant une position géographique de chacun des ordinateurs sont gérées,
le programme d'apprentissage/évaluation est exécuté par l'un des multiples ordinateurs, et
pour chacun desdits un ou plusieurs jeux de données, en réponse au fait que la seconde condition d'exécution est associée à chaque jeu de données incluant une condition de position qui est une condition d'une condition géographique et en réponse au fait que la condition d'exécution satisfait à la condition d'exécution du programme d'apprentissage/évaluation, un ordinateur appartenant à une position géographique indiquée par la condition de position provenant des informations de gestion d'ordinateur est identifié, et l'ordinateur identifié exécute le programme d'apprentissage/évaluation avec le jeu de données utilisé à titre d'entrée vers le modèle.
